# EUROPÄISCHE PATENTSCHRIFT

(11) **EP 3 539 045 B1**
(45) Veröffentlichungstag und Bekanntmachung des Hinweises auf die Patenterteilung: **30.12.2020**
(21) Anmeldenummer: 17807721.0
(22) Anmeldetag: 08.11.2017
(51) Int. Cl.: G06F 21/62, H04L 29/06

(54) **SYSTEM MIT ZERTIFIKAT-BASIERTER ZUGRIFFSKONTROLLE**
SYSTEM WITH CERTIFICATE-BASED ACCESS CONTROL
SYSTÈME À CONTRÔLE D'ACCÈS BASÉ SUR CERTIFICAT

(30) Priorität: 09.11.2016 DE 102016221959
(43) Veröffentlichungstag der Anmeldung: 18.09.2019
(60) Teilanmeldung: 19187170.6 / 3 588 357
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE)
(74) Vertreter: Richardt Patentanwälte PartG mbB
(86) Internationale Anmeldenummer: PCT/EP2017/078660
(87) Internationale Veröffentlichungsnummer: WO 2018/087177

(56) Entgegenhaltungen:
- SABRINA DE CAPITANI DI VIMERCATI ET AL: "Integrating trust management and access control in data-intensive Web applications", ACM TRANSACTIONS ON THE WEB (TWEB), Bd. 6, Nr. 2, 1. Mai 2012 (2012-05-01), Seiten 1-43, XP055446944, 2 Penn Plaza, Suite 701 New York NY 10121-0701 USA ISSN: 1559-1131, DOI: 10.1145/2180861.2180863
- KHAN M FAHIM FERDOUS ET AL: "A patient-centric approach to delegation of access rights in healthcare information systems", 2016 INTERNATIONAL CONFERENCE ON ENGINEERING & MIS (ICEMIS), IEEE, 22. September 2016 (2016-09-22), Seiten 1-6, XP033004846, DOI: 10.1109/ICEMIS.2016.7745308 [gefunden am 2016-11-15]

## Beschreibung

### Technisches Gebiet

Die vorliegenden Darstellungen betreffen IT-Systeme und insbesondere die Zugriffskontrolle auf von IT-Systemen verwaltete Datenobjekte mittels Zertifikaten.

### Stand der Technik

Aus dem Stand der Technik sind verschiedene Ansätze zur Zugriffskontrolle auf in IT-Systemen wie z.B. Datenbanken gespeicherte Daten bekannt.

Beispielsweise können klassische, SQL basierte Datenbanken verwendet werden, die von entsprechend geschultem Personal verwaltet werden. Ein oder mehrere Datenbankadministratoren sind verantwortlich für die Pflege der Daten und die Einrichtung von Datenbanken und Datenbanknutzern.

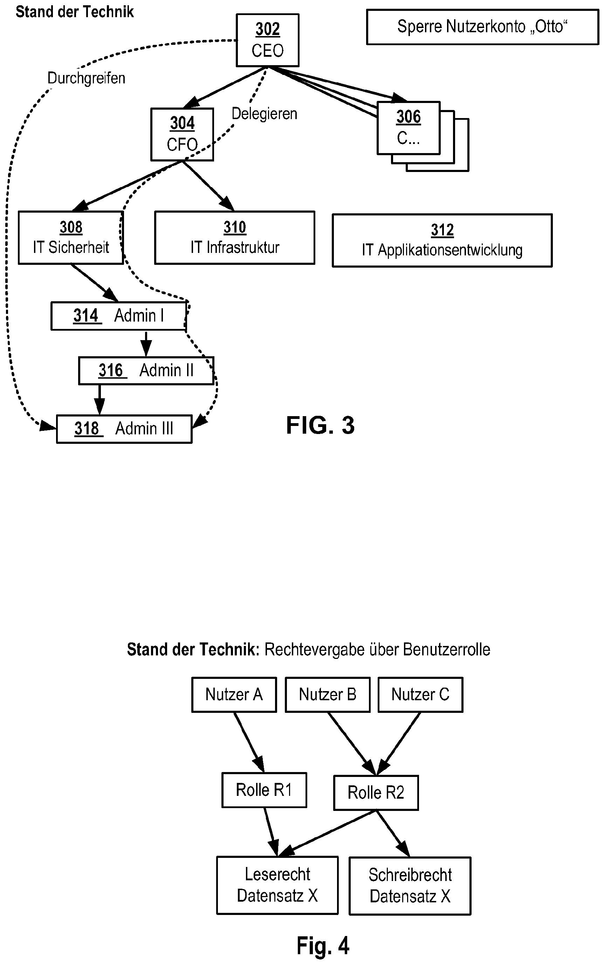

So zeigt beispielsweise Figur 3 eine typische Organisationsstruktur eines Unternehmens und die organisatorische Einbettung der Datenbanken und der Tätigkeit der Administratoren in die Unternehmenshierarchie. Typischerweise sind in einem Unternehmen ein oder mehrerer Geschäftsführer 302 sowie mehrere Abteilungsleiter 304, 306 tätig. Diesen untergeordnet sind Leiter 308, 310, 312 einzelner technischer Teams, die für die Sicherheit und Verfügbarkeit der IT-Struktur oder für die Entwicklung Unternehmensrelevanter Applikationen verantwortlich sind. Zur IT Sicherheit können mehrere Administratoren 314, 316, 318 gehören, die ebenfalls hierarchisch organisiert sind.

Scheidet nun ein Mitarbeiter "Otto" aus dem Unternehmen aus, oder liegt der Verdacht einer Untreue vor, kann es notwendig sein, dem Mitarbeiter "Otto" sehr kurzfristig seine Zugangsberechtigungen zu sensiblen Unternehmensdaten zu entziehen. Im Stand der Technik erfolgt dies typischerweise dadurch, dass eine leitende Stelle, z.B. der Geschäftsführer oder Leiter der Personalabteilung, die Aufgabe des Entzugs der Zugriffsberechtigung über mehrere Hierarchiestufen weitergibt ("delegieren"). Dies ist oft mit erheblichen zeitlichen Verzögerungen verbunden, da jede krankheits- oder urlaubsbedingte Abwesenheit eines Mitarbeiters innerhalb der Kette zu entsprechenden Verzögerungen führt. Oder der Geschäftsführer oder bzw. Leiter der Personalabteilung greift selbst ein ("durchgreifen"), was aber den Nachteil hat, dass Personen, die ohnehin im Regelfall zeitlich überlastet sind, sich auch noch um IT-nahe Verwaltungstätigkeiten kümmern müssen.

In einem weiteren Aspekt werden im Stand der Technik oft rollenbasierte Zugriffsberechtigungssysteme verwendet wie in Figur 4 dargestellt. Diese haben jedoch den Nachteil, dass nicht mehr nachvollzogen werden kann, welcher Nutzer für eine bestimmte Datenveränderung verantwortlich war, da mehrere Nutzer unter derselben Rolle handeln können. Insbesondere für die Verwaltung sicherheitskritischer, sensibler Daten ist daher der Einsatz rollenbasierter Systeme zur Verwaltung von Zugriffsrechten problematisch.

In einem weiteren Aspekt haben im Stand der Technik verwendete Zugriffsverwaltungssysteme den Nachteil, dass die technischen Administratoren notwendigerweise Zugriff auf alle Daten des Unternehmens einschließlich der Daten des Geschäftsführers haben. Dies birgt die Gefahr, dass sensible Daten nach außen dringen.

Die Publikation "Integrating trust management and access control in data-intensive Web applications", Sabrina De Capitani Di Vimercati et al., ACM TRANSACTIONS ON THE WEB (TWEB), Bd. 6, Nr. 2, 1. Mai 2012, Seiten 1-43, XP055446944, ISSN: 1559-1131, 001: 10.1145/2180861.2180863 beschäftigt sich mit webbasierten Diensten, die von öffentlichen und privaten Unternehmen angeboten werden, und betont die Notwendigkeit einer flexiblen Lösung zum Schutz der über Webanwendungen zugänglichen Informationen. Ein Ansatz, der hier zum Einsatz kommt, ist die Zugangskontrolle und das Trustmanagement mittels Berechtigungsnachweisen ("credentials"). Die Berechtigungsachweise werden von DBMS oftmals nicht unterstützt. In diesem Artikel wird ein Ansatz beschrieben, der das Trust-Management mit der Zugriffskontrolle des DBMS integriert. Das Vertrauensmodell verwendet eine SQL-Syntax und Zertifikate.

Die Publikation "A patient-centric approach to delegation of access rights in healthcare information systems",Khan M Fahim Ferdous et al., 2016 INTERNATIONAL CONFERENCE ON ENGINEERING & MIS (ICEMIS), IEEE, 22. September 2016 (2016-09-22), Seiten 1-6, XP033004846, beschäftigt sich mit Datenschutzverletzungen in der Gesundheitsbranche. Es wird ein ein robustes Zugriffskontrollsystem vorgestellt, indem nur autorisierten Zugriffsanforderungen Zugriff auf sensible Patientendaten gewährt wird. Es wird ein patientenzentrierter Mechanismus zur Delegation von Zugriffsrechten vorgestellt, bei dem ein Patient die volle Kontrolle über seine Delegation von Zugriffsrechten ausüben kann, indem er ein manipulationssicheres Delegationstoken ausgibt. Das vorgestellte Verfahren verwendet Public-Key-Kryptographie und manipulationssichere Geräte.

### Technisches Problem und grundlegende Lösungen

Mit den bekannten IT-Systemen und Datenbanken und diesbezüglich entwickelten Verfahren der Zugriffsverwaltung und/oder Organisation von Daten sind zwar Möglichkeiten zur Verwaltung der Zugriffsrechte einzelner Nutzer auf verschiedene Inhalte von Datenbanken gegeben. Im Kontext einer typischen Organisationsstruktur mittelständischer oder großer Unternehmen bedeutet dies aber Nachteile in Bezug auf die Geschwindigkeit und Flexibilität, mit der Zugriffsrechte geändert werden können und in Bezug auf die klare Feststellbarkeit von Verantwortlichkeiten.

Vor diesem Hintergrund besteht ein Bedarf an verbesserten Verfahren zur Verwaltung von Zugriffsrechten und an entsprechend verbesserten Zugriffs-Verwaltungssysteme insofern, dass die vorangehend erwähnten Nachteile damit zumindest teilweise vermeidbar sind.

Der Erfindung liegt demgegenüber die Aufgabe zugrunde, ein verbessertes Verfahren zur Zugriffskontrolle auf Datensätze zu schaffen, sowie ein entsprechendes Zugriffskontrollsystem.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zur Zugriffskontrolle auf Datensätze. Das Verfahren umfasst:
- Verknüpfung eines ersten Eigner-Zertifikats, das einer Nutzdaten-Datenbank zugeordnet ist, mit einem ersten Nutzer, wobei ein Eigner-Zertifikat ein Zertifikat ist, das einer oder mehreren Nutzdaten-Datenbanken zugeordnet ist und jedem Nutzer, mit dem es verknüpft ist, das Recht gewährt, Datensätze in dieser Nutzdaten-Datenbank anzulegen;
- Bereitstellung einer ersten Schnittstelle, die es dem ersten Nutzer ermöglicht, ein zweites Eigner-Zertifikat für die Nutzdaten-Datenbank zu erstellen und dieses mit einem zweiten Nutzer zu verknüpfen um diesem zu ermöglichen, Datensätze in der Nutzdaten-Datenbank anzulegen;
- Bereitstellung einer zweiten Schnittstelle, die es dem zweiten Nutzer, der einen Datensatz in der Nutzdaten-Datenbank erstellt hat, ermöglicht, mindestens ein Zugriffs-Zertifikat, das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen,
- Prüfung der Zugriffsberechtigung des ersten Nutzers auf einen von dem zweiten Nutzer angelegten Datensatz, wobei die Nutzdaten-Datenbank den Zugriff nur dann gewährt, wenn dem ersten Nutzer sowohl ein Eigner-Zertifikat für die Nutzdaten-Datenbank als auch ein Zugriffs-Zertifikat für den Zugriff auf den Datensatz zugeordnet ist.

Dies kann vorteilhaft sein, da jeder Nutzer, auch auf der untersten "Rechte-Ebene", volle Kontrolle über die von ihm erstellten Daten erlangt: auch wenn ein anderer Nutzer, z.B. der Geschäftsführer oder eine dem Geschäftsführer untergeordnete, vertrauenswürdige Person (z.B. Bereichsleiter, Sicherheitsbeauftragter, etc) dem Nutzer zunächst einmal durch Ausstellung eines Eigner-Zertifikats erlauben müssen, überhaupt Daten in einer Nutzdaten-Datenbank anzulegen, so bedeutet dies nicht, dass dadurch der Geschäftsführer oder die besagte vertrauenswürdige Person damit automatisch auch Zugriff auf die von diesem Nutzer erstellte Daten haben. Damit wird der Datenschutz enorm erhöht, denn bei dem die Daten erzeugenden Nutzer kann es sich sowohl um einfache Mitarbeiter und Angestellte handeln als auch um leitende Angestellte oder Geschäftsführer handeln. Beispielsweise kann das erste Eigner-Zertifikat für eine Nutzdaten-Datenbank an einen Geschäftsführer ausgestellt werden, welcher dann wiederum weitere Eigner-Zertifikate an den Sicherheitsbeauftragten und einfache Angestellte ausstellt. Dies bedeutet aber nicht automatisch, dass dieser Geschäftsführer auf die Daten, die der Sicherheitsbeauftragte oder die Angestellten dann in dieser Nutzdaten-Datenbank erstellt, auch lesen können. Dies ist vielmehr nur möglich, wenn ein Nutzer, der einen bestimmten Datensatz anlegt, ein oder mehreren Zugriffsrechte bezüglich der von diesem Nutzer erstellten Datensätzen explizit an den Geschäftsführer zuweist. In einem vorteilhaften Aspekt ist also ein hohes Maß an Datenschutz gewährleistet da eine Prüfung zweier unabhängiger Parameter vor Zugriffsgewährung erfolgt (sowohl bezüglich der Eignerschaft als auch bezüglich der Zugriffsberechtigung). Gerade im Hinblick auf die unabhängige Tätigkeit unternehmensinterner Kontrollgremien wie etwa des Aufsichtsrats, der Qualitätskontrolle, des Betriebsrats oder des Betriebsarztes kann es wichtig sein, dass ein Vorgesetzter die von diesen Personen bzw. Stellen generierte Daten nicht automatisch lesen darf.

In einem weiteren Aspekt können Ausführungsformen der Erfindung sicherstellen, dass technische Administratoren, die z.B. die Hardware für die Nutzdaten-Datenbanken bereitstellen und administrieren, im Hinblick auf die Zugriffsrechte auf die in diesen Datenbanken gespeicherten Informationen keine besonderen Zugriffs-rechte besitzen. Damit kann das Problem, dass heute das technisch-administrative Personal oftmals freien Zugang auf hoch sensible Daten der Geschäftsführung hat, vermieden werden.

In einem weiteren vorteilhaften Aspekt ermöglicht die Verwendung der ersten und zweiten Schnittstelle eine unabhängige Kontrolle und Rechtevergabe bezüglich zweier technischer Funktionalitäten, nämlich a) der Funktionalität der Datensatzerzeugung in einer Datenbank und b) der Funktionalität des Zugriffs auf Datensätze innerhalb der Datenbank. Eine in hohem Maße flexible und feingranulare Zuweisung von Rechten wird somit ermöglicht, was angesichts komplexer und sich häufig ändernder Zuständigkeitsverhältnisse gerade in großen Konzernen von hohem Vorteil ist. Der initiale Eigner einer Datenbank kann frei bestimmen, welchen anderen Nutzern er Eignerschafts-Rechte zuerkennen will, ohne hierbei in technischer Hinsicht an bestimmte Unternehmenshierarchien gebunden zu sein. In analoger Weise ist jeder Nutzer, der Daten erstellt hat, frei, beliebigen anderen Nutzern Zugriffsrechte auf diese Daten über die Zuweisung entsprechender Zugriffsrechte zu gewähren, ohne hierbei in technischer Hinsicht an bestimmte Unternehmenshierarchien gebunden zu sein, und ohne dass übergeordnete Personen und/oder das technisch-administrative Personal automatisch Zugriff auf die erstellten Daten haben.

Nach Ausführungsformen umfasst die Prüfung der Zugriffsberechtigung:
- Empfang einer Zugriffsanfrage durch die Nutzdaten-Datenbank von dem ersten Nutzer;
- Aufbau einer Datenbankverbindung für den ersten Nutzer zu der Nutzdaten-Datenbank nur dann, wenn die Nutzdaten-Datenbank feststellt, dass ein valides Eigner-Zertifikat der Nutzdaten-Datenbank mit dem ersten Nutzer verknüpft ist, wobei der Aufbau der Datenbankverbindung unabhängig davon erfolgt, welche Zugriffs-Zertifikate mit dem ersten Nutzer verknüpft sind;
- Falls die Datenbankverbindung aufgebaut wird, Gewährung des Zugriffs auf den Datensatz des zweiten Nutzers nur dann, wenn die Nutzdaten-Datenbank feststellt, dass ein Zugriffs-Zertifikat mit dem ersten Nutzer verknüpft ist, wobei der Zugriff nur im Rahmen der in dem Zugriffs-Zertifikat spezifizierten Art des Zugriffs gewährt wird.

Dies kann vorteilhaft sein, da einem Nutzer, der kein Eigner-Zertifikat hat, von vorneherein schon der Verbindungsaufbau zu der Datenbank verwehrt wird. Somit kann auf einfache Weise global sichergestellt werden (z.B. durch Entzug des Eigner-Zertifikats), dass ein bestimmter Nutzer auf keinerlei Daten einer bestimmten Nutzdaten-Datenbank mehr zugreifen kann, ohne dass hierfür ggf. eine große Zahl an Nutzern, die diesem Nutzer ein Zugriffsrecht für die von ihnen jeweils erstellte Daten eingeräumt haben, diesem einen Nutzer die Zugriffsrechte einzeln entziehen müssten. Durch Zuweisung oder Entziehung (z.B. Invalidierung oder Verweigerung einer erneuten Ausstellung nach dem Ablauf eines aktuellen Eigner-Zertifikats (typische Validitätsdauer z.B. innerhalb einiger Tage, Wochen oder Monate)) kann also ein relativ weitreichender, global gut kontrollierbarer Zugriffsschutz für sämtliche in einer Datenbank gespeicherte Daten bereitgestellt werden.

Nach Ausführungsformen umfasst das mindestens eine Zugriffs-Zertifikat ein oder mehrere der folgenden Zugriffs-Zertifikattypen:
- ein Lesezugriffs-Zertifikat, welches einem Nutzer einen lesenden Zugriff auf den Inhalt eines Datensatzes ermöglicht;
- ein Schreibzugriffs-Zertifikat, welches einem Nutzer einen modifizierenden Zugriff auf den Inhalt eines bereits existierenden Datensatzes ermöglicht;
- ein Indexzugriffs-Zertifikat, welches einem Nutzer Kenntnis der Existenz des Datensatzes in der Nutzdaten-Datenbank und einen lesenden Zugriff auf Metadaten des Datensatzes ermöglicht.

Beispielsweise ermöglicht ein Indexzugriffs-Zertifikat es einem Nutzer, eine statistische Auswertung mehrerer Datensätze zu erhalten, etwa bezüglich der Frage, auf wie viele Datensätze einer Nutzdaten-Datenbank ein bestimmter Nutzer Lesezugriff oder Schreibzugriff besitzt oder wie viele Datensätze in dem Nutzdatenfeld die Wörter "Max Mustermann" beinhalten.

Die Verwendung mehrerer unterschiedlicher Typen von Zugriffs-Zertifikaten für unterschiedliche Zugriffsarten und die individuelle Zuweisung dieser Zertifikatstypen an einzelne Nutzer um diesen den Zugriff auf die von einem Nutzer erstellte Daten zu ermöglichen, kann vorteilhaft sein, da dadurch eine besonders feingranulare Kontrolle des Zugriffs auf die Daten ermöglicht wird.

Nach Ausführungsformen beinhaltet das erste und/oder zweite Eigner-Zertifikat einen Delegierbarkeitsparameter, welcher entweder den Datenwert "DELEGIERBAR" oder den Datenwert "NICHT DELEGIERBAR" annehmen kann. Eine zur Erstellung der Eigner-Zertifikate verwendete Programmlogik, z.B. ein ID-Management Modul, ist so konfiguriert, dass
- ein Nutzer, dem ein Eigner-Zertifikat für die Nutzdaten-Datenbank zugeordnet ist und welcher ein Eigner-Zertifikat für einen anderen Nutzer für diese Nutzdaten-Datenbank erstellt, den Delegierbarkeitsparameter des erstellten Eigner-Zertifikats unabhängig vom Delegierbarkeitsparameter des ihm zugeordneten Eigner-Zertifikats auf "NICHT DELEGIERBAR" setzen kann, den Delegierbarkeitsparameter des erstellten Eigner-Zertifikats jedoch nur dann auf "DELEGIERBAR" setzen kann, wenn der Delegierbarkeitsparameter seines Eigner-Zertifikats den Wert "DELEGIERBAR" hat; und
- ein Nutzer, welchem eine Eigner-Zertifikat für eine Nutzdaten-Datenbank zugeordnet ist, dessen Delegierbarkeitsparameter den Wert "NICHT DELEGIERBAR" hat, keine weiteren Eigner-Zertifikate für andere Nutzer für diese Nutzdaten-Datenbank erstellen kann.

Nach alternativen Ausführungsformen beinhaltet ein Datenobjekt, das ein Eigner-Zertifikat einem bestimmten Nutzer zuweist oder das das Eigner-Zeritifikat einer Kette aus zwei oder mehr Nutzern, die sich das Eigner-Recht zugewiesen haben, zuweist, den Delegierbarkeitsparameter. Ein solches Objekt, im Folgenden auch als Eignerschaftermächtigungskettenobjekt bezeichnet, kann z.B. in Form einer neuen Kopie erzeugt und in der ID-Datenbank gespeichert werden sobald eine Kette aus Nutzern, die sich das Eigner-Recht für eine Nutzdaten-Datenbank zugewiesen haben, um ein Kettenglied (also z.B. ein weiteres Nutzer-Zertifikat) erweitert wird. Der Delegierbarkeitsparameter kann entweder den Datenwert "DELEGIERBAR" oder den Datenwert "NICHT DELEGIERBAR" annehmen. Eine zur Erstellung der Eigner-Zertifikate verwendete Programmlogik, z.B. ein ID-Management Modul, ist so konfiguriert, dass
- ein Nutzer, dem ein Eigner-Zertifikat für die Nutzdaten-Datenbank zugeordnet ist und welcher ein neues Eignerschaftsermächtigungskettenobjekt in der ID-Datenbank speichert, um einem anderen Nutzer für diese Nutzdaten-Datenbank das Eigner-Zertifikat zuzuweisen, den Delegierbarkeitsparameter des erstellten Eignerschaftsermächtigungskettenobjekts unabhängig vom Delegierbarkeitsparameter eines bestehenden Eignerschaftsermächtigungskettenobjekts, dass diesem Nutzer das Eigner-Zertifikat zuweist, auf "NICHT DELEGIERBAR" setzen kann, den Delegierbarkeitsparameter des erstellten Eignerschaftsermächtigungskettenobjekts jedoch nur dann auf "DELEGIERBAR" setzen kann, wenn der Delegierbarkeitsparameter des bestehenden Eignerschaftsermächtigungskettenobjekts (welches dem das neue Recht ausstellenden Nutzer das Eigner-Zertifikat zuweist) den Wert "DELEGIERBAR" hat; und
- ein Nutzer, welchem eine Eigner-Zertifikat für eine Nutzdaten-Datenbank mittels eines Eignerschaftsermächtigungskettenobjekts zugeordnet ist, dessen Delegierbarkeitsparameter den Wert "NICHT DELEGIERBAR" hat, keine weiteren Eignerschaftsermächtigungskettenobjekte erstellen kann, welche dieses Eigner-Zertifikat anderen Nutzern für diese Nutzdaten-Datenbank zuweist.

Dies kann vorteilhaft sein, da ein hoher Grad an Dynamik und Flexibilität im Hinblick auf die Vergabe der Zugriffsrechte ermöglicht wird: typischerweise wird einem bestimmten Nutzer, zum Beispiel dem Geschäftsführer, ein Eigner-Zertifikat für eine bestimmte Nutzdaten-Datenbank zugeordnet. Dieses "erste/initiale" Eigner-Zertifikat hat vorzugsweise den Delegierbarkeitsparameterwert "DELEGIERBAR". Dieser Nutzer kann nun über die erste Schnittstelle dieses erste Eigner-Zertifikat in identischer oder modifizierter Kopie ein oder mehreren weiteren Nutzern zuordnen, sodass diese weiteren Nutzer im Hinblick auf die Nutzdaten-Datenbank ebenfalls Eigner-Rechte bekommen und Datensätze anlegen können. Dabei kann der Inhaber des ersten Eigner-Zertifikats entscheiden, ob die den weiteren Nutzern zugeordneten Eigner-Zertifikate für diese Nutzdaten-Datenbank ebenfalls delegierbar sein sollen, diese anderen Nutzer also ebenfalls die Möglichkeit haben sollen, weiteren Nutzern Eigner-Rechte bezüglich dieser Nutzdaten-Datenbank auszustellen. Falls eine modifizierte Kopie des Eigner-Zertifikats für die ein oder mehreren weiteren Nutzer erstellt wird, welches den Delegierbarkeitsparameterwert "NICHT DELEGIERBAR" besitzt, können die weiteren Nutzer zwar eine Datenbankverbindung zu der Nutzdaten-Datenbank erstellen und dort Datensätze erzeugen, jedoch keine weiteren Eigner-Zertifikate für weitere Nutzer bezüglich dieser Nutzdaten-Datenbank ausstellen. Die Kette der ausgestellten Eigner-Zertifikate endet also notwendigerweise mit der Ausstellung von nicht weiter delegierbaren Eigner-Zertifikaten, wobei es natürlich möglich ist, das einen bestimmten Nutzer von einem Datenbank-Eigner ein delegierbares Eigner-Zertifikat ausgestellt wird und von einem anderen Datenbank-Eigner ein nicht-delegierbares Eigner-Zertifikat. In diesem Fall kann der Nutzer weitere Eigner-Zertifikate für Dritte ausstellen, jedoch wird vorzugsweise die chronologische Kette der ein Eigner-Zertifikat ausstellen Nutzer gespeichert, zum Beispiel in Form von Ermächtigungsobjekten und/oder Logeinträgen, sodass der Pfad der Verantwortungskette dokumentiert ist. Vorzugsweise erfolgt die Speicherung dieser chronologischen Kette in einer speziellen Datenbank, im folgenden "ID- Datenbank" genannt. In analoger Weise kann der Delegierbarkeitsparameter innerhalb eines Zuweisungsobjekts, also z.B. eines Eignerschaftsermächtigungskettenobjekts, gespeichert sein und vorgeben, ob ein Nutzer weitere Zuweisungsobjekte (weitere Eignerschaftsermächtigungskettenobjekte) erstellen darf um ein Eigner-Zertifikat anderen Nutzern zuzuweisen).

In einem weiteren vorteilhaften Aspekt wird jedem Datenbank-Eigner damit die Möglichkeit gegeben, frei zu entscheiden, ob er Verantwortung (und Arbeit!) bezüglich der Zugriffsrechtsverwaltung einer Datenbank an eine bestimmte Person so weitreichend delegieren möchte, dass diese ihrerseits wiederum diese Tätigkeit delegieren kann, oder ob nur ein einfaches Eigner-Recht zum Erstellen von eigenen Datensätzen in der Nutzdaten-Datenbank erteilt werden soll.

Nach Ausführungsformen erfolgt die Verknüpfung des zumindest einen Zugriffs-Zertifikat mit dem erzeugten Datensatz so, dass das zumindest eine Zugriffs-Zertifikat desjenigen Nutzers, welcher den Datensatz erstellt hat, als Bestandteil des Datensatzes in einem eigenen Feld der Nutzdaten-Datenbank gespeichert wird.

Dies kann vorteilhaft sein, da das Zugriffs-Zertifikat getrennt von den übrigen Nutzdaten indiziert werden kann, sodass über den Index eine schnelle Suche nach Datensätzen, die ein bestimmter Nutzer erstellt hat, möglich ist.

Vorzugsweise handelt es sich bei den in den entsprechenden Feldern des Datensatz gespeicherten Zugriffs-Zertifikaten um reine Zahlenwerte, nicht um komplexe x509 Zertifikate. Metadaten bezüglich der Gültigkeit und andere Aspekte können getrennt von dem eigentlichen Zugriffs-Zertifikat in der ID-Datenbank gespeichert sein. Vorzugsweise enthält jeder von einem bestimmten Nutzer in einer Nutzdaten-Datenbank erstellte Datensatz in seinen entsprechenden Feldern sämtliche Zugriffs-Zertifikate des diesen Datensatz erstellenden Nutzers. Wird beispielsweise ein Datensatz DS von Nutzer U1 erstellt und der Nutzer-U1 hat gemäß dem Inhalt der ID-Datenbank genau 3 Typen von Zertifikaten (ein Lesezugriffs-Zertifikat "U1.Z-Zert[R]", ein Schreibzugriffs-Zertifikat "U1.Z-Zert[W]" und ein Indexzugriffs-Zertifikat "U1.Z-Zert[S]"), so werden Kopien genau dieser 3 Zugriffs-Zertifikate im Zuge der Speicherung des Datensatzes DS aus der ID-Datenbank erstellt und die in die entsprechenden Felder des Datensatzes DS gespeichert. Wenn nun der Nutzer-U1 einem anderen Nutzer U2 Leserechte bezüglich des Datensatzes DS einräumt, bedeutet das, dass in der ID-Datenbank eine Zuordnung dieses Lesezugriffs-Zertifikat "U1.Z-Zert[R]" des Nutzers U1 und des Nutzer-Zertifikats des Nutzers U2 gespeichert wird. Falls der Nutzer U2 nun zu einem späteren Zeitpunkt auf den Datensatz DS zugreifen will, sendet die Nutzdaten-Datenbank, die den Datensatz DS beinhaltet, in Antwort auf die Zugriffsanfrage des Nutzers U2 automatisch eine Berechtigungsanfrage an die ID-Datenbank zusammen mit den in dem Datensatz DS gespeicherten Zugriffsrechten des Erstellers U1. Die ID-Datenbank prüft daraufhin, ob ein dem Nutzer U2 zugeordnetes Nutzer-Zertifikat in der ID-Datenbank mit ein oder mehreren der in dem Datensatz DS gespeicherten Zugriffsrechte des Erstellers U1 verknüpft gespeichert ist. Nur falls dies der Fall ist, und falls der Nutzer U2 außerdem Eigner der Nutzdaten-Datenbank ist, darf er auf den Datensatz zugreifen.

Nach Ausführungsformen umfasst das zumindest eine Zugriffs-Zertifikat, dass vorzugsweise als Bestandteil des erstellten Datensatzes gespeichert ist, mehrere Zugriffs-Zertifikate für jeweils andere Zugriffsarten. Die mehreren Zugriffs-Zertifikate umfassen zum Beispiel ein Schreibzugriffs-Zertifikat Z.Zert_U2[W] des erstellenden Nutzers, und/oder ein Lesezugriffs-Zertifikat Z.Zert_U2[R] des erstellenden Nutzers und/oder ein Indexzugriffs-Zertifikat Z.Zert_U2[S].

Das Zugriffs-Verwaltungssystem erzeugt automatisch für jede der Zugriffsarten eine Indexstruktur aus den Zugriffs-Zertifikaten sämtlicher Datensätze, die diese Zugriffsart spezifiziert. So kann zum Beispiel ein erster Index für die Schreibzugriffs-Zertifikate, ein zweiter Index für die Lesezugriffs-Zertifikate und ein dritter Index für die Index Zugriffs-Zertifikate sowie ein weiterer Index für die Nutzdaten selbst erstellt werden. In Antwort auf eine Datenbankfrage eines Nutzers, die auf einen oder mehrere der für die Nutzdaten-Datenbank erstellten Indices der Zugriffs-Zertifikate zugreift, prüft das Zugriffs-Verwaltungssystem, ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist. Diese Prüfung kann insbesondere durch die Nutzdaten-Datenbank in Interoperation mit der ID-Datenbank und gegebenenfalls weiteren Modulen, zum Beispiel dem ID-Management-Modul, erfolgen. Die Nutzdaten-Datenbank ermöglicht dem anfragenden Nutzer die Verwendung der ein oder mehreren Indices zur Ausführung der Datenbankabfrage nur dann, wenn dem anfragenden Nutzer das Indexzugriffs-Zertifikat zugewiesen ist.

Dies kann vorteilhaft sein, da über den Index eine schnelle Abfrage einer Zugriffsberechtigungsstatistik über die Datensätze einer Datenbank im Hinblick auf mehrere verschiedene Nutzer durchgeführt werden kann. Aus dieser geht dann zum Beispiel hervor, welche der bei dem Zugriffs-Verwaltungssystem registrierten Nutzer im Hinblick auf welche Datensätze zum Lesen, Schreiben und oder Indexzugriff berechtigt ist. Allerdings wird über eine Anfrage, die durch das Indexzugriffs-Zertifikat ermöglicht wird, nur eine statistische Auskunft über mehrere Datensätze gegeben, ein lesender oder schreibenden Zugriff auf die Nutzdaten der Datensätze ist in den Rechten, die einen Indexzugriffs-Zertifikat gewährt, nicht umfasst.

Nach Ausführungsformen wird das Verfahren von einem Zugriffs-Verwaltungssystem, welches eine oder mehrere Nutzdaten-Datenbanken sowie eine ID-Datenbank beinhaltet ausgeführt, wobei die Ausstellung weiterer Zugriffs-Zertifikate und/oder Eigner-Zertifikate für bestimmte Nutzer vorzugsweise in Interoperation mit menschlichen Nutzern erfolgt. Beispielsweise kann das Zugriffs-Verwaltungssystem eine grafische Benutzeroberfläche (GUI) bereitstellen, welche es den Nutzern einer Organisation ermöglicht, weitere Eigner-Zertifikate für andere, manuell ausgewählte Nutzer für eine bestimmte Nutzdaten-Datenbank zu erstellen, sofern dem ausstellenden Nutzer selbst ein entsprechendes Eigner-Zertifikat in der ID-Datenbank zugewiesen ist. Zusätzlich kann es diese Benutzeroberfläche dem Nutzer, der einen bestimmten Datensatz erstellt hat, ermöglichen, ein oder mehreren anderen manuell über die GUI ausgewählten Nutzern, ein oder mehrere ausgewählte Zugriffsrechte auf diesen Datensatz einzuräumen. Beispielsweise kann die GUI mehrere Personen, die der Organisation angehören, in Form einer auswählbaren Personenliste grafisch repräsentieren, sodass ein Nutzer der GUI durch Auswahl von ein oder mehreren Personen aus dieser Personenliste die Empfänger der einzuräumenden Eigner-und Zugriffsrechte spezifizieren kann. Weitere auswählbare GUI Elemente, zum Beispiel Radio-Buttons oder Check-Boxes können es dem Nutzer der GUI ermöglichen, durch Auswahl dieses Elementes den Delegierbarkeitsparameter des ausgestellten Zugriffs-bzw. Eigner-Zertifikats zu bestimmen (delegierbar oder nicht-delegierbar), sofern die Berechtigung des Nutzers hierfür ausreichend ist. Die GUI kann ferner über auswählbare GUI Elemente verfügen, die es einem Nutzer ermöglichen, Zugriffsrechte, die er anderen Nutzern eingeräumt hat, auch wieder zu entziehen. Die GUI ist so konfiguriert, dass sie automatisch im Hintergrund neue Zertifikate und/oder Zuweisungen von Zertifikaten zu nutzen gemäß den Eingaben des Nutzers über die GUI erstellt oder invalidiert und den Inhalt der ID-Datenbank entsprechend aktualisiert.

Nach Ausführungsformen handelt es sich bei den ein oder mehreren Nutzdaten-Datenbanken und der ID-Datenbank jeweils um eine NoSQL-Datenbank. Vorzugsweise handelt es sich bei den NoSQL-Datenbanken jeweils um eine sogenannte "strukturlose" Datenbank, die eine freie Definition der Art und Anzahl der Datenfelder unterstützt. Vorzugsweise ist die NoSQL-Datenbank so konfiguriert, dass der Inhalt sämtlicher Datenfelder eines jeden neuen Datensatzes automatisch indexiert wird und dass Änderungen des Inhalts der Datenbank in Form neuer Versionen gespeichert werden ("versionierte Datenbank"). Vorzugsweise wird die Erzeugung neuer Zugriffs-und/oder Eigner-Zertifikate sowie die chronologische Sequenz der Nutzer, die anderen Nutzern jeweils diese Zertifikate zugewiesen haben, in einer Log (z.B. Log-Datei) der ID-Datenbank gespeichert.

Nach Ausführungsformen handelt es sich bei dem Zugriffs-Verwaltungssystem um ein Datenbanksystem. Es ist jedoch auch möglich, dass andere Systeme die zur Speicherung von Daten ausgelegt sind, verwendet werden, z.B. Microcontroller, in deren Speicher die Zertifikate und Ermächtigungskettenobjekte sowie die hier beschriebene Programmlogik implementiert sein kann.

Nach Ausführungsformen handelt es sich bei dem Zugriffs-Verwaltungssystem, das die ein oder mehrere Nutzdaten-Datenbanken und die ID-Datenbank umfasst, um ein NoSQL Datenbanksystem.

Nach Ausführungsformen ist dem ersten Nutzer ein erstes Nutzer-Zertifikat zugeordnet. Das erste Nutzer-Zertifikat kann zum Beispiel ein Root-Zertifikat, das von einer Zertifizierungsstelle (certifying authority - CA) herausgegeben wird, sein. Das erste Nutzer-Zertifikat ist in eine von einer Zertifizierungsstelle (140) herausgegebene erste Zertifikatskette prüfbar eingeordnet (ist also beispielsweise bis zum Root-Zertifikat der Zertifizierungsstelle prüfbar). Dies kann vorteilhaft sein, da Zertifizierungsstellen als unabhängige Vertrauensgaranten auf breiter Basis bereits akzeptiert sind und bereits von vielen bestehenden technischen Systemen zur Prüfung der Authentizität bestimmter Nutzer und Nutzeraktionen verwendet werden.

Nach Ausführungsformen wird das zweite Eigner-Zertifikat so erstellt, dass dieses in die erste Zertifikatskette eingeordnet ist und durch das erste Nutzer-Zertifikat prüfbar ist. Beispielsweise wird das zweite Eigner-Zertifikat von dem Zugriffs-Verwaltungssystem durch den privaten Schlüssel des ersten Nutzer-Zertifikats signiert. In analoger Weise kann der erste Nutzer auch Kopien von Zugriffs-Zertifikates, die anderen Nutzern Zugriff auf die von dem ersten Nutzer erstellte Datensätze einräumen, mit dem privaten Schlüssel seines Nutzer-Zertifikats (hier also des ersten Nutzer-Zertifikats) signieren.

Nach Ausführungsformen ist dem zweiten Nutzer ein zweites Nutzer-Zertifikat zugeordnet, wobei das zweite Nutzer-Zertifikat in eine von einer Zertifizierungsstelle herausgegebene zweite Zertifikatskette prüfbar eingeordnet ist.

Nach Ausführungsformen umfasst das Verfahren eine Erstellung eines dritten Eigner-Zertifikats durch den zweiten Nutzer über die erste Schnittstelle und Verknüpfung des dritten Eigner-Zertifikats mit einem dritten Nutzer, um diesem zu ermöglichen, Datensätze in der Nutzdaten-Datenbank anzulegen.

Nach Ausführungsformen beinhaltet das zumindest eine Zugriffs-Zertifikat einen Delegierbarkeitsparameter, welcher entweder den Datenwert "DELEGIERBAR" oder den Datenwert "NICHT DELEGIERBAR" annehmen kann. Eine zur Erstellung jedes der Zugriffs-Zertifikate verwendete Programmlogik ist so konfiguriert ist, dass

Ein Nutzer, dem ein Zugriffs-Zertifikat für einen Datensatz (106-116) in der Nutzdaten-Datenbank (102) zugeordnet ist und welcher ein Zugriffs-Zertifikat für einen anderen Nutzer für diesen Datensatz erstellt, den Delegierbarkeitsparameter des erstellten Zugriffs-Zertifikats unabhängig vom Delegierbarkeitsparameter seines Zugriffs-Zertifikats auf "NICHT DELEGIERBAR" setzen kann, den Delegierbarkeitsparameter des erstellten Zugriffs-Zertifikats jedoch nur dann auf "DELEGIERBAR" setzen kann, wenn der Delegierbarkeitsparameter des diesem Nutzer zugewiesenen Zugriffs-Zertifikats den Wert "DELEGIERBAR" hat; und

Ein Nutzer, welchem ein Zugriffs-Zertifikat für einen Datensatz zugeordnet ist, dessen Delegierbarkeitsparameter den Wert "NICHT DELEGIERBAR" hat, keine weiteren Zugriffs-Zertifikate für andere Nutzer für diesen Datensatz erstellen kann.

Alternativ dazu kann der Delegierbarkeitsparameter auch als Bestandteil eines Datenobjekts gespeichert sein, welches ein bestimmtes Zugriffs-Zertifikat einem Nutzer oder einer Kette von Nutzern, die sich dieses Zugriffs-Zertifikat zugewiesen haben, zuweist. Im Folgenden wird ein solches Datenobjekt auch als Zugriffsermächtigungskettenobjekt bezeichnet. Wie bereits oben für das Eignerschaftsermächtigungskettenobjekt darstestellt kann der Nutzer in Abhängigkeit vom Wert des Delegierbarkeitsparameters des Zugriffsermächtigungskettenobjekts, welches diesem Nutzer ein bestimmtes Nutzer-Zertifikat zuweist, eine Kopie dieses Zugriffsermächtigungskettenobjekts erstellen, die ein zusätzliches Nutzer-Zertifikat des Nutzers enthält, welchem das Zugriffsrecht zugewiesen werden soll, oder nicht.

Auch die Zugriffs-Zertifikate oder die Zugriffsermächtigungskettenobjekte können also, wie bereits für die Eigner-Zertifikate beschrieben, als delegierbare oder als nicht-delegierbare Zugriffs-Zertifikate erstellt und anderen Nutzern zugewiesen werden bzw. die Zuweisung selbst, also die Zugriffsermächtigungskettenobjekte, kann delegierbar oder nicht-delegierbar sein. So kann jeder Ersteller eines Datensatzes und jeder Inhaber eines delegierbaren Zugriffs-Zertifikats eines anderen Nutzers, der einen Datensatz erstellt hat, flexibel selbst entscheiden, ob und inwieweit er die Zugriffs-Verantwortung und damit zusammenhängende Pflichten und Tätigkeiten an andere Nutzer überträgt. Dies kann vorteilhaft sein, da ein hoher Grad an Flexibilität und Komplexität der Zugangsgewährung ermöglicht wird.

Nach Ausführungsformen sind in einer ID-Datenbank eine Vielzahl von Nutzer-Zertifikaten, eine Vielzahl von Zugriffs-Zertifikaten und eine Vielzahl von Eigner-Zertifikaten gespeichert. Das Verfahren umfasst die Speicherung von Eignerschaftsermächtigungskettenobjekten und/oder Zugriffsermächtigungskettenobjekten in der ID-Datenbank.

Jedes Eignerschaftsermächtigungskettenobjekt ist ein Datenobjekt, welches eines der Eigner-Zertifikate und ein oder mehrere der Nutzer-Zertifikate beinhaltet (und dadurch einander zuweist). Die Reihung der Nutzer-Zertifikate in dem Eignerschaftsermächtigungskettenobjekt gibt die Sequenz der Nutzer, die dieses Eignerschafts-Zertifikat für jeweils andere Nutzer, deren Nutzer-Zertifikat in dem Eignerschaftsermächtigungskettenobjekt enthalten ist, erstellt haben, wieder.

Jedes Zugriffsermächtigungskettenobjekt ist ein Datenobjekt, welches eines der Zugriffs-Zertifikate und ein oder mehrere der Nutzer-Zertifikate beinhaltet (und dadurch einander zuweist). Die Reihung der Nutzer-Zertifikate in dem Zugriffsermächtigungskettenobjekt gibt die Sequenz der Nutzer, die dieses Zugriffs-Zertifikat für jeweils andere Nutzer, deren Nutzer-Zertifikat in dem Zugriffsermächtigungskettenobjekt enthalten ist, ausgestellt haben, wieder.

Dies kann vorteilhaft sein, da im Falle eines von einem bestimmten Nutzer verursachten Fehlers (zum Beispiel der Löschung eines für mehrere Nutzer wichtigen Datensatzes) anhand der Zugriffsermächtigungskettenobjekte und/oder Eignerschaftsermächtigungskettenobjekte sofort ersichtlich ist, wer diesem Nutzer die entsprechenden Rechte eingeräumt hat und damit eventuell mitverantwortlich für dessen Fehler ist. Vorzugsweise werden die besagten Ermächtigungskettenobjekte oder zumindest deren Inhalt regelmäßig oder zumindest bei jeder Änderung oder Aktualisierung in eine Logdatei des Zugriffsverwaltungs-Systems geschrieben, sodass die Kette der Verantwortlichkeit auch für jeden denkbaren Zeitpunkt in der Vergangenheit dokumentiert ist und rekonstruiert werden kann.

Nach Ausführungsformen sind die Nutzdaten-Datenbanken frei von Zugriffsermächtigungskettenobjekten und beinhalten für jeden Datensatz nur die Zugriffs-Zertifikate, die dem Nutzer, welcher diesen Datensetz erstellt hat, Zugriff auf diesen Datensatz gewähren.

Die Verknüpfung dieser Zugriffs-Rechte des Datensatzerstellers mit ein oder mehreren anderen Nutzern um diesen Zugriff auf den Datensatz zu gewähren ist nicht in der Nutzdaten-Datenbank gespeichert, sondern in der ID-Datenbank. Umgekehrt enthält die ID-Datenbank keine Referenz auf einzelne Datensätze der Nutzdaten-Datenbänke. Dies kann vorteilhaft sein, da die Größe und Komplexität der einzelnen Datensätze der Nutzdaten-Datenbank begrenzt und logisch von der Verwaltung der Zugriffsrechte weitgehend entkoppelt wird. Die Größe der Datensätze wird also auch dadurch begrenzt, dass nicht die komplette Kette der Berechtigungsübertragungen als Bestandteil der Datensätze gespeichert werden. Insbesondere bei einer Vielzahl kleiner Datensätze mit identischer Berechtigungsstruktur kann dies den von der Datenbank benötigten Speicherplatz erheblich reduzieren.

Nach Ausführungsformen umfasst das Verfahren ferner:
- Empfang einer Zugriffsanfrage des ersten Nutzers durch die Nutzdaten-Datenbank, wobei in der Zugriffsanfrage der erste Nutzer Zugriff auf einen Datensatz, den der zweite Nutzer angelegt hat, anfrägt;
- Ermitteln der Zugriffs-Zertifikate des zweiten Nutzers, der in der Nutzdaten-Datenbank als Bestandteil des einen Datensatzes gespeichert ist, durch die Nutzdaten-Datenbank;
- Senden des ersten Nutzer-Zertifikats, das dem anfragenden Nutzer zugeordnet ist, und der ermittelten Zugriffs-Zertifikate, von der Nutzdaten-Datenbank an die ID-Datenbank;
- In Antwort auf den Empfang des ersten Nutzer-Zertifikats und der ermittelten Zugriffs-Zertifikate, Generierung eines Berechtigungsnachweises durch die ID-Datenbank, wobei der Berechtigungsnachweis angibt, ob der erste Nutzer einem Eigner-Zertifikat der Nutzdaten-Datenbank durch zumindest eines der Eignerschaftsermächtigungskettenobjekte zugewiesen ist und ob der erste Nutzer dem einen Datensatz durch zumindest eines der Zugriffsermächtigungskettenobjekte zugewiesen ist;
- Übermittlung des Berechtigungsnachweises von der ID-Datenbank an die Nutzdaten-Datenbank;
- Prüfung, durch die Nutzdaten-Datenbank, anhand des Berechtigungsnachweises, ob dem ersten Nutzer ein Eigner-Zertifikat für die Nutzdaten-Datenbank zugewiesen ist und ob und welche Zugriffs-Zertifikate dem ersten Nutzer in Bezug auf den einen Datensatz zugewiesen sind;
- wobei die Nutzdaten-Datenbank dazu konfiguriert ist, dem ersten Nutzer einen Aufbau einer Datenbankverbindung nur dann zu gewähren, wenn diesem ein Eigner-Zertifikat für die Nutzdaten-Datenbank zugewiesen ist und dem ersten Nutzer Zugriff auf den einen Datensatz nur in dem Umfang zu gewähren, welche dem ersten Nutzer durch die diesem zugewiesenen Zugriffs-Zertifikate einräumen.

Nach Ausführungsformen beinhaltet die ID-Datenbank einen privaten Signierschlüssel. Die Nutzdaten-Datenbank beinhaltet einen öffentlichen Signaturprüfschlüssel, welcher zur Prüfung der mit dem Signierschlüssel erstellten Signaturen ausgebildet ist. Das Verfahren umfasst die Signierung des Berechtigungsnachweises (oder mehrerer für einen Nutzer ausgestellten Berechtigungsnachweise) durch die ID-Datenbank mit dem Signierschlüssel, wobei der Berechtigungsnachweis in signierter Form an die Nutzdaten-Datenbank übermittelt wird. Die Nutzdaten-Datenbank prüft mittels des Signaturprüfschlüssels, ob die Signatur des Berechtigungsnachweises valide ist, wobei der Aufbau der Datenbankverbindung und der Datensatzzugriff nur dann gestattet wird, wenn die Signatur valide ist.

Dies kann vorteilhaft sein, da es nicht erforderlich ist, einzelne Nutzdaten-Datenbanken mit Programlogik zur Zertifikatskettenprüfung auszustatten. Ganz allgemein kann durch das beschriebene Verfahren bzw. die beschriebene Datenbankstruktur eine weitgehende Trennung der Datenhaltung (in der Nutzdaten-Datenbanken) und der Verwaltung von Zugriffsrechten (in der ID-Datenbank) erzielt werden. Die ID-Datenbank enthält und/oder ist operativ gekoppelt an ein oder mehrere Programmmodule zum Beispiel zur Zertifikatskettenprüfung (zum Beispiel von Nutzer-Zertifikaten bis hin zum Root-Zertifikat der das Nutzer-Zertifikat ausstellenden Zertifizierungsstelle), zur Speicherung von Änderungen der Zuweisungen von Zertifikaten und Nutzern in einer Log-Datei und in Ermächtigungskettenobjekten sowie zur dynamischen Erstellung von signierten Berechtigungsnachweisen unter Berücksichtigung der in den Ermächtigungskettenobjekten dokumentierten Chronologie der Übertragung von Rechten. Die einzelnen Nutzdaten-Datenbanken müssen dahingegen nur über Mittel zur Prüfung, ob für die Nutzdaten-Datenbank selbst bzw. für die darin enthaltenen Datensätze entsprechende Berechtigungen vorliegen verfügen (oder an diese operativ gekoppelt sein), wobei diese Mittel gegebenenfalls Mittel zur Signaturprüfung umfassen.

Nach Ausführungsformen führt die ID-Datenbank im Zuge der Erzeugung des Berechtigungsnachweises, der eines der Eigner-Zertifikate beinhaltet, eine Zertifikatskettenprüfung durch. Dies geschieht, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekte zugewiesen ist, eingebunden ist. Die ID-Datenbank signiert den Berechtigungsnachweises nur im Falle der Feststellung einer erfolgreichen Einbindung in die Zertifikatskette des Eigner-Zertifikat. Diese Zertifikatskettenprüfung kann also insbesondere entlang der Zertifikatskette der Zertifizierungsstelle, die das Nutzer-Zertifikat als Root-Zertifikat herausgegeben hat, erfolgen.

Zusätzlich oder alternativ dazu führt die ID-Datenbank im Zuge der Erzeugung eines Berechtigungsnachweises, der ein oder mehrere Zugriffs-Zertifikate eines Nutzers zum Zugriff auf von ihm erstellte Datensätze beinhaltet, eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist. Die ID-Datenbank signiert den Berechtigungsnachweis nur im Falle der Feststellung einer erfolgreichen Einbindung.

Nach Ausführungsformen verwendet der zweite Nutzer, der einen bestimmten Datensatz erstellt hat, oder ein dritter Nutzer, dem über ein Zugriffsermächtigungskettenobjekt ein oder mehrere Zugriffszertifikate des zweiten Datenbank-Nutzers zugewiesen sind, die zweite Schnittstelle, um ein weiteres Zugriffsberechtigungskettenobjekt anzulegen. In diesem weiteren Zugriffsberechtigungskettenobjekt werden ein oder mehrere Zugriffs-Zertifikate des Erstellers (also des zweiten Nutzers) dem vierten Nutzer zugewiesen. Die Nutzdaten-Datenbank ist dazu konfiguriert, vor der Gewährung des Zugriffs auf den von dem zweiten Nutzer erzeugten Datensatz durch den vierten Nutzer zu prüfen, ob dem vierte Nutzer ein oder mehrere dieser Zugriffs-Zertifikate zugewiesen sind.

Nach einer Ausführungsform ist jedem der Datensätze in der Nutzdaten-Datenbank ein oder mehrere Zugriffs-Zertifikate des den Datensatz erstellenden Nutzers zugeordnet.

Den Eigner-Zertifikaten in der ID-Datenbank jeweils ein oder mehrere Nutzer-Zertifikate so zugeordnet sind, dass die chronologische Sequenz von Nutzern, die sich Eignerrechte der Nutzdaten-Datenbank eingeräumt haben, jeweils in Form einer ersten Hierarchie repräsentiert ist. Diese Zuordnung kann z.B. mittels Eignerschaftsermächtigungskettenobjekten erfolgen.

Den Zugriffs-Zertifikaten in der ID-Datenbank sind jeweils ein oder mehrere Nutzer-Zertifikate so zugeordnet, dass die chronologische Sequenz von Nutzern, die sich ein oder mehrere der Zugriffsrechte des den Datensatz erstellenden Nutzers eingeräumt haben, jeweils in Form einer zweiten Hierarchie repräsentieren ist. Diese Zuordnung kann z.B. mittels Zugriffsermächtigungskettenobjekten erfolgen.

Die ersten Hierarchien werden unabhängig von den zweiten Hierarchien dynamisch erzeugt, z.B. dadurch dass Nutzer mit Eigner-Berechtigung im Hinblick auf eine bestimmte Nutzdaten-Datenbank einem anderen Nutzer diese Berechtigung mittels einer GUI des Zugriffs-Verwaltungssystems übertragen und dieser andere Nutzer diesen Schritt wiederholt, um einem weiteren Nutzer Eigner-Rechte einzuräumen, sodass eine erste Hierarchie von erteilten Eigner-Rechten für diese bestimmte Datenbank entsteht. Werden mehrere Nutzdaten-Datenbanken verwaltet, kann für jede der Nutzdaten-Datenbanken eine eigene erste Hierarchie entstehen.

Die zweiten Hierarchien können z.B. dadurch gebildet werden, dass ein Nutzer U2 einen Datensatz anlegt, wobei in dem angelegten Datensatz drei Zugriffs-Zertifikate des Nutzers U2 (Lese-, Schreib-, und Index-Zugriff) enthalten sind. Der zweite Nutzer überträgt nun z.B. selektiv das Schreib-Zugriffsrecht an einen Nutzer U3, indem das Schreibzugriffs-Zertifikat von U2 mit dem Nutzer-Zertifikat von U3 in der ID-Datenbank verknüpft gespeichert wird (Zugriffsermächtigungskettenobjekt). Der dritte Nutzer U3 überträgt nun z.B. selektiv das Schreib-Zugriffsrecht an einen vierten Nutzer U4, indem das Schreibzugriffs-Zertifikat von U2 mit dem Nutzer-Zertifikat von U4 in der ID-Datenbank verknüpft gespeichert wird. Im Hinblick auf das Schreibzugriffs-Zertifikat von Nutzer U2 ist eine zweite Hierarchie gemäß U2→U3 → U4 entstanden. In analoger Weise können weitere zweite Hierarchien für andere Zugriffsrechte (z.B. Lese- und Indexzugriffsrechte des gleichen Nutzers U2 oder anderer Nutzer) entstehen, die auf individuellen Vertrauensverhältnissen zwischen Nutzern beruhen, nicht auf einer starren, vorgegebenen Hierarchie einer Organisation.

Vorzugsweise prüft die ID-Datenbank bei der Übertragung von Zugriffsrechten nicht, ob der Empfänger auch über Eigner-Rechte für die entsprechende Datenbank verfügt, sodass auch die Entstehung der zweiten Hierarchien unabhängig von der Entstehung der ersten Hierarchien erfolgt. Dies kann z.B. dann sinnvoll sein, wenn ein Nutzer einem anderen Zugriff auf seine Daten zu einem Zeitpunkt verschaffen möchte, an dem er weiß, dass dem Empfänger der Zugriffsrechte in absehbarer Zukunft auch Eigner-Rechte für die Nutzdaten-Datenbank, die den fraglichen Datensatz enthält, eingeräumt werden.

Nach Ausführungsformen sind in der Nutzdaten-Datenbank die Datensätze in einem Format gespeichert, welches eine Extraktion der in den Datensätzen enthaltenen Information ohne einen Zugriff über eine Datenbankverbindung zu der Nutzdaten-Datenbank ausschließt. Beispielsweise können die Datensätze als binäre Objekte oder in verschlüsselter Form gespeichert sein. Backups der Nutzdaten-Datenbank führt der Administrator-Nutzer (also die digitale Repräsentanz einer technischadministrativ tätigen Person ohne gesonderte Zugriffsrechte auf die Datensätze) oder das Zugriffs-Verwaltungssystem durch Kopieren der Nutzdaten-Datenbank auf ein anderes Speichermedium aus, wobei der Administrator-Nutzer kein Eigner-Zertifikat für diese Nutzdaten-Datenbank besitzt.

Dies kann vorteilhaft sein, da der Administrator-Nutzer zwar noch die ihm typischerweise zugeordneten Tätigkeiten wie zum Beispiel das Erstellen von Backups durchführen kann, jedoch nicht mehr auf den Inhalt der in der Datenbank gespeicherten Nutzerdaten zugreifen kann. Dies schützt die Organisation durch missbräuchliche Weitergabe sensibler Daten an Dritte durch den Administrator-Nutzer. Der Administrator-Nutzer des Zugriffs-Verwaltungssystems hat nach Ausführungsformen der Erfindung also deutlich weniger Zugriffsrechte als dies in herkömmlichen IT-Systemen der Fall ist.

Nach Ausführungsformen schreibt das Zugriffs-Verwaltungssystem die chronologische Sequenz der Erzeugung aller Eigner-Zertifikate und Zugriffs-Zertifikate durch eine Kette einander vertrauender Nutzer sowie die chronologische Sequenz der Zuweisung von Zugriffs-Zertifikaten und Eignerschafts-Zertifikaten zu Nutzer-Zertifikaten entlang einer weiteren Kette sich vertrauender Nutzer in ein Datenbanklog.

Beispielsweise kann das Zugriffs-Verwaltungssystem einen neuen Log-Eintrag erzeugen, wann immer ein Nutzer einen neuen Datensatz erzeugt, wann immer ein Nutzer einem anderen Nutzer ein Zugriffs-Zertifikat neu zuweist (oder in dieses entzieht) und wann immer ein Nutzer einem anderen Nutzer ein Eigner-Zertifikat neu zuweist (oder ihm dieses entzieht). Vorzugsweise wird jeder Log-Eintrag mit einem Zeitstempel versehen, sodass die aktuellen Eigner-und Zugriffsrechte sämtlicher Nutzer, die sich bei dem Zugriffs-Verwaltungssystem registriert haben, zu einem beliebigen Zeitpunkt in der Vergangenheit bekannt ist.

Dies kann vorteilhaft sein, da anhand der Log-Datei auch für jeden Zeitpunkt der Vergangenheit überprüft werden kann, wer welche Rechte besaß und von wem. Im Falle eines missbräuchlichen Zugriffs auf eine Datenbank und/oder einen Datensatz kann somit nicht nur der jeweilige Nutzer, der den missbräuchlichen Zugriff durchgeführt hat, sondern auch die Kette aller Nutzer, die diesem Nutzer die entsprechenden Rechte eingeräumt haben, rekonstruiert werden.

Nach Ausführungsformen repräsentiert jeder oder zumindest einige der Datensätze in der Nutzdaten-Datenbank jeweils ein Funktionsobjekt. Nur ein Nutzer, dem sowohl ein Eigner-Zertifikat der Nutzdaten-Datenbank als auch ein Zugriffs-Zertifikat für den Zugriff auf das Funktionsobjekt zugewiesen ist, wird von dem Zugriffs-Verwaltungssystem gestattet, die Funktion durchzuführen bzw. die Ausführung der Funktion zu veranlassen. Bei der Funktion kann es sich beispielsweise um das Starten eines Geräts, die Aktivierung oder Bewegung einer Hardwarekomponente, das Öffnen oder Schließen einer Tür für Gebäude, Räume oder Fahrzeuge, das Öffnen oder Schließen sonstiger Zutrittsbarrieren oder Verschlussvorrichtungen von Behältnissen oder um eine bestimmte Software Funktionalität handeln.

Somit kann die oben beschriebene vorteilhafte, flexible und feingranulare Zugriffskontrolle nicht nur für die Kontrolle des Zugriffs auf Datensätze, sondern auch für die Kontrolle des Zugriffs auf eine Vielzahl anderer Funktionen einschließlich Hardwarefunktionalitäten verwendet werden.

In einem weiteren Aspekt betrifft die Erfindung ein System mit einer oder mehreren Nutzdaten-Datenbanken und einer ID-Datenbank. Das System bzw. dessen Komponenten ist bzw. sind zur Durchführung eines Verfahrens zur Zugriffskontrolle auf Datensätze, die in einer der Nutzdaten-Datenbanken gespeichert sind, konfiguriert. Das Verfahren umfasst:
- Verknüpfung eines ersten Eigner-Zertifikats, das der Nutzdaten-Datenbank zugeordnet ist, mit einem ersten Nutzer, wobei ein Eigner-Zertifikat ein Zertifikat ist, das einer oder mehreren Nutzdaten-Datenbanken zugeordnet ist und jedem Nutzer, mit dem es verknüpft ist, das Recht gewährt, Datensätze in dieser Nutzdaten-Datenbank anzulegen;
- Bereitstellung einer ersten Schnittstelle, die es dem ersten Nutzer ermöglicht, ein zweites Eigner-Zertifikat für die Nutzdaten-Datenbank zu erstellen und dieses mit einem zweiten Nutzer zu verknüpfen um diesem zu ermöglichen, Datensätze in der Nutzdaten-Datenbank (102) anzulegen;
- Bereitstellung einer zweiten Schnittstelle, die es dem zweiten Nutzer, der einen Datensatz in der Nutzdaten-Datenbank erstellt hat, ermöglicht, mindestens ein Zugriffs-Zertifikat, das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen,
- Prüfung der Zugriffsberechtigung des ersten Nutzers auf einen von dem zweiten Nutzer angelegten Datensatz, wobei die Nutzdaten-Datenbank den Zugriff nur dann gewährt, wenn dem ersten Nutzer sowohl ein Eigner-Zertifikat für die Nutzdaten-Datenbank als auch ein Zugriffs-Zertifikat für den Zugriff auf den Datensatz zugeordnet ist.

Beispielsweise kann die Prüfung von der Nutzdaten-Datenbank in Interoperation mit der ID-Datenbank durchgeführt werden. Die erste und zweite Schnittstelle können beispielsweise von einem ID-Management Modul oder einer ID-Management Applikation implementiert und instanziiert werden. Das ID-Management Modul bzw. die ID-Management Applikation hat Zugriff auf den Inhalt der ID-Datenbank und vorzugsweise auch auf die Zugriffs-Zertifikate, die in den einzelnen Datensätzen der Nutzdaten-Datenbanken gespeichert sind. Das ID-Management Modul kann zum Beispiel als Plug-In das Zugriffs-Verwaltungssystem implementiert sein.

Unter **"Nutzdaten"** werden hier Daten verstanden, die für einen Nutzer, für einen Arbeitsablauf oder für eine Hardware- oder Softwarefunktionalität außerhalb des sie beinhaltenden Zugriffs-Verwaltungssystems relevant sind und welche nicht der Zugriffsverwaltung von Zugriffsrechten verschiedener Nutzer eines Zugriffs-Verwaltungssystems dienen. Nutzdaten können insbesondere Text, Zeichen, Bilder und Töne umfassen.

Eine **"NoSQL"** (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Cache, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter einem **"Zugriffs-Verwaltungssystem"** oder **"System"** wird im Folgenden ein elektronisches System zur Speicherung und Wiedergewinnung von Daten verstanden. Beispielsweise kann es sich bei dem Zugriffs-Verwaltungssystem um ein "Datenbanksystem", auch "Datenbankmanagementsystem" (DBMS) handeln. Es ist aber auch möglich, dass die Daten in einem Mikrocontrollerspeicher gespeichert werden und von einem Applikationsprogramm verwaltet werden, das als Zugriffs-Verwaltungssystem arbeitet, ohne ein klassisches DBMS zu sein. Vorzugsweise werden die Daten in dem Zugriffs-Verwaltungssystem widerspruchsfrei und dauerhaft gespeichert und verschiedenen Anwendungsprogrammen und Nutzern in bedarfsgerechter Form effizient zur Verfügung gestellt. Ein Datenbankmanagementsystem kann typischerweise ein oder mehrere Datenbanken beinhalten und die darin enthaltenen Datensätze verwalten.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar.

Unter einer **"Datenbank"** wird im Folgenden eine (typischerweise große) Menge von Daten verstanden, die in einem Computersystem von einem Zugriffs-Verwaltungssystem nach bestimmten Kriterien verwaltet werden.

Unter einer **"ID-Datenbank"** wird im Folgenden eine Datenbank verstanden, welche nutzerbezogene Informationen wie zum Beispiel Nutzer-Zertifikate sowie diesen Nutzern zugewiesene Rechte in Form von weiteren Zertifikaten enthält und verwaltet. In Abgrenzung zu Nutzdaten-Datenbanken, welche vorwiegend der Speicherung von Nutzdaten dienen, dient die ID-Datenbank vorwiegend der Verwaltung der den Nutzern im Hinblick auf die Nutzdaten zugewiesenen Eigner- und Zugriffsrechte.

Unter einem **"Nutzer"** wird im Folgenden die digitale Repräsentanz einer menschlichen Person oder einer Softwarelogik verstanden, die bei dem Zugriffs-Verwaltungssystem registriert ist. Bei einem Nutzer kann es sich insbesondere um einen Datenbanknutzer handeln, der eine bestimmte menschliche Person repräsentiert. Alternativ dazu kann es sich bei dem Nutzer um einen System-Nutzer handeln, also eine digitale Repräsentation eines menschlichen Nutzers, die von einem Betriebssystem eines Rechners verwaltet wird, und welcher zum Beispiel ein oder mehrere Datenbanknutzer zugeordnet sein können. Auch ist es möglich, dass verschiedene Softwareapplikationen jeweils durch einen Nutzer repräsentiert und bei dem Zugriffs-Verwaltungssystem registriert sind, um gegebenenfalls auf bestimmte Nutzdaten-Datenbanken und deren Datensätze zuzugreifen.

Unter einem **"Zertifikat"** wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Beispielsweise kann das Zertifikat als Zahlenwert ausgebildet sein, welchem in der ID-Datenbank Metadaten zugeordnet sind. Die Verwendung von Zahlwerten kann vorteilhaft sein, da diese sich gut indexieren lassen und nicht einer Variation durch leicht modifizierte Metadaten unterworfen sind. Vorzugsweise sind die Zugriffs-Zertifikate einzelner Nutzer als Attributzertifikate, insbesondere als Zahlwerte ausgebildet. Attributzertifikate enthalten keinen öffentlichen Schlüssel, sondern verweisen auf ein Public-Key-Zertifikat und legen dessen Geltungsbereich genauer fest. Alternativ dazu kann ein Zertifikat auch nach dem Standard X.509 ausgebildet sein, also einen öffentlichen Schlüssel beinhalten und die Identität des Inhabers sowie weitere Eigenschaften des öffentlichen kryptographischen Schlüssels des Zertifikats bestätigen. Ein Zertifikat kann sich, muss sich aber nicht notwendigerweise auf einen kryptographischen Schlüssel beziehen, sondern kann allgemein Daten zur Prüfung einer elektronischen Signatur enthalten oder mit diesen Daten verknüpft gespeichert sein.

Unter **"Log"** wird hier insbesondere eine Datenmenge, z.B. eine Log-Datei, verstanden, welche automatisch erzeugt wird und in welcher Prozesse, die in einem Zugriffs-Verwaltungssystem ablaufen, aufgezeichnet werden.

Unter einer **"Schnittstelle"** wird im Folgenden eine Verbindungsstelle für den Datenaustausch zwischen einem Zugriffs-Verwaltungssystem und einem oder mehreren menschlichen Nutzern verstanden, welche eine Programmlogik beinhaltet, die in Abhängigkeit von Nutzer-Interaktionen mit der Schnittstelle Zugriffs- und Eigner-Rechte erzeugt und/oder anderen Nutzern zuweist. Die Schnittstelle kann insbesondere als graphische Benutzeroberfläche ("GUI") oder als ein Teilbereich einer GUI ausgebildet sein.

Unter einem **"Root-Zertifikat"** oder "Wurzel-Zertifikat" wird im Folgenden dasjenige Zertifikat bezeichnet, das den Vertrauensanker einer PKI darstellt. Da das Wurzel-zertifikat und damit die gesamte Zertifikatshierarchie nur vertrauenswürdig bleibt, solange dessen privater Schlüssel ausschließlich der ausstellenden Partei bekannt ist, kommt dem Schutz der Root-CA höchste Bedeutung zu.

Gemäß manchen Ausführungsformen stellt das Nutzer-Zertifikat desjenigen Nutzers, der in der Hierarchie einer Organisation ganz oben angesiedelt ist, das Root-Zertifikat der PKI dieser Organisation dar. Die Nutzer-Zertifikate aller anderen Mitglieder dieser Organisation sind von dem privaten Schlüssel dieses Root-Zertifikats signiert und damit von diesem gemäß einer Zertifikatskettenhierarchie abhängig. Aufgrund des hohen Schutzbedürfnisses des Root-Zertifikats erfolgt die automatische Verarbeitung von Signatur- oder Verschlüsselungsanforderungen mit Unterzertifikaten, die mit dem Root-Zertifikat signiert wurden und eine kürzere Gültigkeit (meist wenige Monate bis Jahre) als das Root-Zertifikat (das in der Regel mehrere Jahre oder Jahrzehnte gilt) aufweisen. Beispielsweise können die Nutzer-Zertifikate anderer Nutzer und/oder die von einzelnen Nutzern ausgestellten oder übertragenen Eigner-Zertifikate, Zugriffs-Zertifikate und/oder Attribut-Zertifikate eine begrenzte Gültigkeitsdauer von wenigen Tagen oder Monaten haben. Die Gültigkeit der Unterzertifikate wird so gewählt, dass es als unwahrscheinlich angesehen werden kann, dass die zu den Unterzertifikaten gehörenden privaten Schlüssel innerhalb des gewählten Gültigkeitszeitraums mit derzeit verfügbarer Rechenkapazität berechnet werden können. Auf diese Weise entsteht eine Zertifikatskette, bei der jeweils auf das unterzeichnende Zertifikat als ausgebende Stelle verwiesen wird. Diese Kette wird in der Regel als Teil eines Zertifikats mitgeliefert, um eine Prüfung bezüglich Vertrauenswürdigkeit, Gültigkeit und ggf. vorhandenem Zertifikatswiderruf entlang der gesamten Zertifikatskette zu ermöglichen.

Unter einem **"Eigner"** oder "Eigentümer" wird im Folgenden ein Nutzer verstanden, dem durch Zuweisung eines Eigner-Zertifikats das Recht im Hinblick auf eine bestimmte Nutzdaten-Datenbank eingeräumt wurde, in dieser Datensätze zu erstellen und eine Datenbankverbindung mit dieser Datenbank aufzubauen. Nach ausführungsformen leiten sich alle Eigner-Zertifikate, die für die Nutzdaten-Datenbanken eines Zugriffsverwaltungs-System ausgestellt wurden, vom Nutzer-Zertifikat ("CEO-Zertifikat") desjenigen Nutzers ab, der die höchste Position innerhalb der Organisation, die das Zugriffsverwaltungs-System betreibt, innehat. Die Ableitung aus diesem Nutzer-Zertifikat bedeutet, dass jede Kopie dieses Eigner-Zertifikats per Zertifikatskettenprüfung auf Validität überprüft werden kann, wobei die für die Zertifikatskettenprüfung verwendete Zertifikatskette das "CEO-Nutzer-Zertifikat" beinhaltet.

Unter einem **"zugriffsberechtigten Nutzer"** wird im Folgenden ein Nutzer verstanden, dem durch Zuweisung eines Zugriffs-Zertifikats das Recht eingeräumt wurde, auf einen Datensatz, der dieses Zugriffs-Zertifikat beinhaltet, auf die Weise zuzugreifen, die in diesem Zugriffs-Zertifikat spezifiziert ist, sofern weitere notwendige Kriterien, wie z.B. die Eignerschaft bezüglich der den Datensatz enthaltenden Datenbank, erfüllt sind.

Die Verwendung von Ordinalzahlen wie erstes, zweites, drittes etc. dient hier, allein der Unterscheidung voneinander Elemente und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Zugriffskontrolle auf Datensätze eines Zugriffs-Verwaltungssystems sowie ein entsprechendes exemplarisches Zugriffs-Verwaltungssystem sind in den anhängenden Zeichnungen 1 -2 sowie 5-9 veranschaulicht. Darin zeigen:
- Figur 1: ein Blockdiagramm einer Ausführungsform eines erfindungsgemäßen Zugriffs-Verwaltungssystem mit mehreren Datenbanken,
- Figur 2: den Vorgang der Erstellung von Berechtigungsnachweisen für zwei Nutzer gemäß einer Ausführungsform des erfindungsgemäßen Verfahrens,
- Figur 3: im Stand der Technik verwendete Verfahren zur Zugriffskontrolle entlang einer vorgegebenen Unternehmenshierarchie,
- Figur 4: im Stand der Technik verwendete Verfahren zur Zugriffskontrolle basierend auf der Verwendung von Rollen,
- Figur 5: den Ablauf der Einräumung von Zugriffsrechten über eine Sequenz von Nutzern,
- Figur 6: Ein Beispiel für Nutzdaten, die Bestandteil eines Datensatzes sind,
- Figur 7: zwei dynamisch und unabhängig voneinander generierte Hierarchien, entlang welcher einerseits Zugriffsrechte und andererseits Eignerrechte über eine Kaskade von Nutzern vergeben wurden,
- Figur 8: die Neuausstellung eines Nutzer-Zertifikats für einen neuen Geschäftsführer einer Organisation, und
- Figur 9: ein Flussdiagramm einer weiteren Ausführungsform eines erfindungsgemäßen Verfahrens.

### Ausführliche Beschreibung

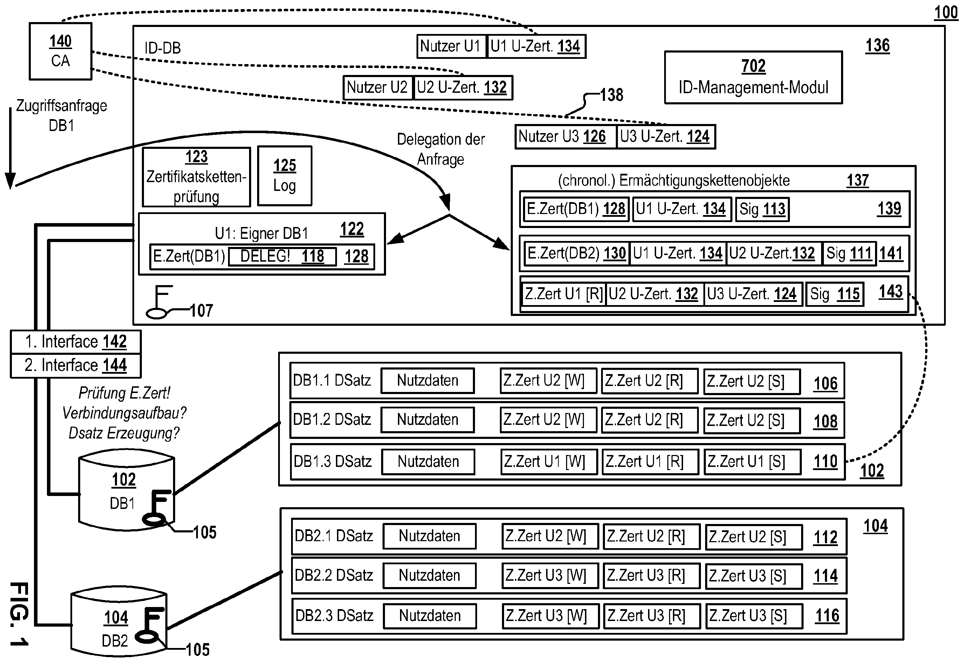

**Figur 1** zeigt ein Blockdiagramm einer Ausführungsform eines erfindungsgemäßen Zugriffs-Verwaltungssystem 100 mit mehreren Nutzdaten-Datenbanken 102 DB1, 104 DB2 und einer ID-Datenbank 136. Das Zugriffs-Verwaltungssystem 100 ist dazu konfiguriert den Zugriff von mehreren Nutzern U1, U2, U3, ..., auf mehrere Datensätze 112, 114, 116 zu kontrollieren.

Beispielsweise ist einem ersten Nutzer- U1 ein Nutzer-Zertifikat 134 zugeordnet. Das Nutzer-Zertifikat 134 wurde von einer Zertifizierungsstelle 140 als ein Root-Zertifikat für den Nutzer-U1 ausgestellt. Nutzer U1 wie auch die anderen Nutzer U2, U3 könnten beispielsweise Mitarbeiter eines Unternehmens repräsentieren. In analoger Weise könnten auch den weiteren Mitarbeitern des Unternehmens Nutzer-Zertifikate 132,124 zugeordnet sein, die von der Zertifizierungsstelle als Root-Zertifikate ausgestellt wurden. Die Nutzer-Zertifikate 134,132,124 können durch Zertifikatskettenprüfung bis zum entsprechenden Rot-Zertifikat der Zertifizierungsstelle geprüft werden.

Der erste Nutzer U1 könnte beispielsweise technischer Administrator für mehrere Nutzdaten-Datenbanken DB1, DB2, sein. Entsprechend kann dem ersten Nutzer U1 ein Eigner-Zertifikat 128 für die erste Nutzdaten-Datenbank DB1 zugeordnet sein. Die Zuordnung, auch "Verknüpfung" genannt, kann beispielsweise in Form eines Ermächtigungskettenobjekts 139 implementiert und in einer ID-Datenbank 136 gespeichert sein.

Das Zugriffs-Verwaltungssystem 100 ist also dazu ausgebildet, ein erstes Eignerzertifikat, zum Beispiel Eigner-Zertifikat 128 bezüglich DB1 oder Eigner-Zertifikat 130 bezüglich DB2 mit dem ersten Nutzer U1 zu verknüpfen. Dies kann durch Speicherung des Eigner-Zertifikats 128 und des Nutzer-Zertifikat 134 des ersten Nutzers U1 in einem Eignerschaftsermächtigungskettenobjekt 139 erfolgen bzw. durch Speicherung des Eigner-Zertifikat 130 und des Nutzer-Zertifikats 134 des ersten Nutzers U1 in einem Eignerschaftsermächtigungskettenobjekt 141. Ein Eigner-Zertifikat ist ein Zertifikat, welches einer oder mehreren Nutzdaten-Datenbanken zugeordnet ist und jedem Nutzer, mit dem es verknüpft ist, das Recht gewährt, Datensätze in dieser Nutzdaten-Datenbank anzulegen. Beispielsweise gewährt das Eigner-Zertifikat 128 jedem Nutzer, dem es (zum Beispiel durch ein Eignerschaftsermächtigungskettenobjekt) zugeordnet ist, das Recht, einen oder mehrere Datensätze in der Datenbank-DB1 zu erstellen.

Das Zugriffs-Verwaltungssystem 100 beinhaltet eine erste Schnittstelle 142, die es dem ersten Nutzer U1, dem das Eigner-Zertifikat 128 für die Datenbank DB1 zugeordnet ist, ermöglicht, ein zweites Eigner-Zertifikat für die Nutzdaten-Datenbank DB1 zu erstellen und dieses zweite Eigner-Zertifikat mit einem zweiten Nutzer U2 zu verknüpfen. Diese Verknüpfung mit dem zweiten Eigner-Zertifikat ermöglicht es dem zweiten Nutzer, nun seinerseits Datensätze in der Nutzdaten-Datenbank DB1 anzulegen. Auch der zweite Nutzer kann sich, sofern das zweite Eigner-Zertifikat gemäß seines Delegierbarkeitsparameters delegierbar ist, dieser ersten Schnittstelle bedienen um weiteren Nutzern seines Vertrauens identische oder veränderte Kopien des Eigner-Zertifikats für die Datenbank-DB1 auszustellen und in Verbindung mit einem Nutzer-Zertifikat dieser weitere Nutzer in der ID-Datenbank zu speichern, zum Beispiel in Form weiterer Eignerschaft Ermächtigungskettenobjekte 139, 141.

Das Zugriffs-Verwaltungssystem 100 beinhaltet eine zweite Schnittstelle 144, die es dem zweiten Nutzer U2, der einen Datensatz 106, 108 in der Nutzdaten-Datenbank 102 erstellt hat (nachdem ihm bereits von dem ersten oder einem anderen Nutzer ein Eigner-Zertifikat für die DB1 ausgestellt wurde), ermöglicht, mindestens ein Zugriffs-Zertifikat zu erstellen und mit dem Nutzer-Zertifikat eines Nutzers, dem Zugriff auf diesen Datensatz gewährt werden soll, zu verknüpfen. Bei dem Nutzer, dem Zugriff gewährt werden soll, kann es sich um einen beliebigen anderen Nutzer, der bei dem Zugriffs-Verwaltungssystem registriert ist und der das Vertrauen des zweiten Nutzers (Datensatzerstellers) besitzt, handeln. Bei den Zugriffs-Zertifikaten des zweiten Nutzers U2 kann es sich zum Beispiel um ein Schreibzugriffs-Zertifikat Z.Zert_U2[W], ein Lesezugriffs-Zertifikat Z.Zert_U2[R] und/oder ein Indexzugriffs-Zertifikat Z.Zert_U2[S] handeln. Ein Zugriffs-Zertifikat kann also eine Art des Datensatzzugriffs auf den von dem zweiten Nutzer erstellten Datensatz spezifizieren.

Falls nun der erste Nutzer U1 auf einen Datensatz 106, 108, den der zweite Nutzer U2 erstellt hat, zugreifen will, prüft das Zugriffs-Verwaltungssystem die Zugriffsberechtigung des ersten Nutzers auf einen von dem zweiten Nutzer angelegten Datensatz 106, 108. Der gewünschte Zugriff wird dem ersten Nutzer nur dann gewährt, wenn das Zugriffs-Verwaltungssystem feststellt, dass dem ersten Nutzer U1 sowohl ein Eigner-Zertifikat für die Nutzdaten-Datenbank 102 als auch ein Zugriffs-Zertifikat Z.Zert U2 [W] (oder [R] oder [S]) für den Zugriff auf den Datensatz zugeordnet ist.

Die einzelnen Datensätze 106, 108, 110, 112, 114, 116 enthalten lediglich Zugriffs-Zertifikate, die der Nutzer, der den betreffenden Datensatz erstellt hat, diesen Datensätzen im Zuge der Erstellung zuweist. Beispielsweise kann das Zugriffs-Verwaltungssystem 100 während des Vorgangs der Erstellung eines neuen Datensatzes im Hintergrund automatisch prüfen, welche Zugriffs-Rechte für den Nutzer, der gerade einen Datensatz erstellt, in der ID-Datenbank hinterlegt sind. Dies kann insbesondere dann vorteilhaft sein, wenn jedem Nutzer ein vordefinierter Satz an Zugriffs-Zertifikaten (zum Beispiel für Lese-, Schreib-, und Indexzugriffsrechte) zugewiesen ist welcher automatisch auch komplett jedem neu erstellten Datensatz zugewiesen werden soll. Diese Situation ist in Figur 1 dargestellt. Alternativ dazu ist es jedoch auch möglich, dass jedem Nutzer mehrere verschiedene Zugriffs-Zertifikate (der gleichen Zugriffsart, zum Beispiel Lesezugriff) in der ID-Datenbank zugewiesen sind und der Nutzer manuell über eine GUI im Zuge der Datensatzerstellung auswählen kann, welche dieser Zugriffs-Zertifikate dem neuen Datensatz zugewiesen werden sollen. Dies kann vorteilhaft sein, da der Nutzer für eine große Vielzahl von Datensätzen, die er anliegt und die zum Beispiel ähnlichen Inhalts sind oder ein ähnliches Vertraulichkeitsniveau besitzen, den gleichen Satz an Zugriffs-Zertifikaten im Zuge der Erstellung zuweisen kann. Für den Fall aber dass der Nutzer zum Beispiel zehn verschiedene Kreditkarten verwaltet und die vertraulichen Kreditkartennummern in zehn verschiedenen Datensätzen speichert, hat der Nutzer auch die Möglichkeit, jedem dieser Datensätze ein anderes Zugriffs-Zertifikat zuzuweisen. Dies hat den Vorteil, dass der Ersteller jedes dieser Kreditkartennummern-Datensätze weiteren Nutzern selektiv nur für einen bestimmten Kreditkartennummern-Datensatz gewähren kann, also ohne den betreffenden weiteren Nutzern automatisch auch Zugriffsrechte für die anderen Kreditkartendatensätze zu geben. Der Einfachheit halber beziehen sich die meisten der hier beschriebenen Ausführungsformen und Beispiele darauf, das einem Nutzer 3 Zugriffs-Zertifikate für Lese-, Schreib-, und Indexzugriffsrechte zugewiesen sind, die im Zuge einer Datensatzerstellung durch den Nutzer automatisch in diesen Datensatz integriert werden. Diese Beispiele sind jedoch so zu verstehen, dass nach alternativen Ausführungsformen und Beispielen der Nutzer, der einen Datensatz erstellt, auch manuell eine bestimmte Untermenge aus vordefinierten und ihm zugewiesenen Zugriffs-Zertifikaten auswählen und in den erstellten Datensatz integrieren kann.

Die in Figur 1 dargestellten Datensätze zeigen, dass beispielsweise die Datensätze 106, 108, und 112 von dem Nutzer U2 angelegt wurden. Der Datensatz 110 wurde von dem Nutzer U1 angelegt. Der Datensatz 116 wurde von dem Nutzer U3 angelegt. Die vordefinierten Zugriffs-Zertifikate der jeweiligen Ersteller wurden in die Datensätze integriert. Zumindest die Ersteller haben also vollumfänglichen Zugriff auf ihre Datensätze, sofern sie auch über ein Eigner-Zertifikat für die jeweilige Nutzdaten-Datenbank verfügen. Es ist jedoch durchaus möglich, dass weitere Nutzer Zugriff auf einzelne Datensätze haben. Diese Information ist jedoch nicht in der Nutzdaten-Datenbank enthalten, sondern in Form von Zugriffsermächtigungskettenobjekten 143 in der ID-Datenbank gespeichert. So ist beispielsweise aus dem Objekt 143 ersichtlich, dass ein Zugriffs-Zertifikat des Nutzers U1, dass ein Leserecht spezifiziert, von dem Ersteller U1 dem Nutzer U2 zugewiesen wurde, indem das Nutzer-Zertifikat 132 dieses Nutzers U2 innerhalb des Objekts 143 mit dem Lesezugriffs-Zertifikat von U1 verknüpft wurde. Außerdem ist aus dem Objekt 143 ersichtlich, dass der Nutzer U2 dieses Leserecht auf einen weiteren Nutzer U3 übertragen (weitergegeben) hat, indem das Nutzer-Zertifikat 124 des Nutzers U3 innerhalb des Objekts 143 mit dem Lesezugriffs-Zertifikat von U1 verknüpft wurde. Im Zuge jeder Übertragung eines Zugriffsrechts bzw. damit einhergehend im Zuge jeder Zuweisung eines weiteren Nutzer-Zertifikats zu einem bestimmten Zugriffs-Zertifikat wird ein neues Zugriffsermächtigungskettenobjekt in der ID-Datenbank vom Zugriffs-Verwaltungssystem erstellt. Dem menschlichen Nutzer wird vorzugsweise eine intuitive GUI angeboten um Nutzern Zugriffs bzw. Eignerrechte zu übertragen und dadurch im Hintergrund die Erzeugung weiterer Zertifikate oder weiterer Verknüpfungen von Zugriffs-bzw. Eigner-Zertifikaten mit Nutzer-Zertifikaten zu initialisieren. Das Zugriffsermächtigungskettenobjekt 143 impliziert also, dass sowohl Nutzer U2 als auch Nutzer U3 (und selbstverständlich auch Nutzer U1) Lesezugriff auf die von Nutzer-U1 erstellten Datensätze, zum Beispiel Datensatz 110, haben.

In analoger Weise spezifizieren Eignerschaftsermächtigungskettenobjekten 139, 141 eine Kette aus ein oder mehreren Nutzern, die anderen Nutzern Eigner-Zertifikate zugewiesen und dadurch Eigner-Rechte übertragen haben. So geht beispielsweise aus Objekt 139 hervor, dass der Nutzer-U1 Eigner-Rechte im Hinblick auf die Nutzdaten-Datenbank-DB1 besitzt, da das Nutzer-Zertifikat 134 des Nutzers U1 in dem Objekt 139 dem Eigner-Zertifikat 128 der DB1 zugewiesen ist. Das Objekt 141 spezifiziert, dass der Nutzer U1 die Eigner-Rechte für die Datenbank DB2 an einen weiteren Nutzer U2 übertragen hat.

Falls ein Nutzer eine Zugriffsanfrage auf eine bestimmte Nutzdaten-Datenbank 102 absendet, prüft das Zugriffs-Verwaltungssystem 100 oder eine Komponente desselben, zum Beispiel die betreffende Datenbank 102, ob dem Nutzer, von dem die Anfrage stammt, in der ID- Datenbank ein Eigner-Zertifikat zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der anfragenden Nutzer diese Eignerrechte hat, wird ihm der Aufbau einer Datenbank Verbindung zu der Nutzdaten-Datenbank 102 gewährt und, falls dies angefragt wird, auch die Erstellung neuer Datensätze in dieser Datenbank. Damit diese Nutzer jedoch auch auf einzelne Datensätze lesend oder schreibend zugreifen kann oder über einen Index unerfahren bringen kann ob ein bestimmter Datensatz überhaupt existiert, müssen ihm (als es einem Nutzer-Zertifikat) in der ID-Datenbank auch die entsprechenden Rechte zugewiesen sein. Das Zugriffs-Verwaltungssystem prüft vor jedem Zugriff eines Nutzers mit Eignerschaftsrechten also zusätzlich, ob der Nutzer über die erforderlichen Zugriffsrechte verfügt.

Nach manchen Ausführungsformen (hier nicht dargestellt) verfügt jeder Datensatz einer bestimmten Nutzdaten-Datenbank über ein oder mehrere zusätzliche Felder für Zugriffs-Zertifikate, die anderen Nutzern oder Funktionen zugewiesen sind (also nicht speziell dem Nutzer, der den Datensatz erstellt hat). Beispielsweise kann es sich bei einer Nutzdaten-Datenbank um eine Finanzdaten-Datenbank oder um eine Personaldaten-Datenbank handeln. Um die Sicherheit zu erhöhen, kann zum Beispiel in jedem Datensatz der Finanzdatenbank ein zusätzliches Feld enthalten sein, in welchem ein Finanzdaten-Zertifikat gespeichert ist. Falls es sich bei der Datenbank um eine Personaldatenbank handelt, kann in jedem Datensatz der Personaldatenbank ein zusätzliches Feld enthalten sein, in welchem ein Personalabteilung-Zertifikat gespeichert ist. Es können eine Vielzahl solcher Felder pro Datensatz enthalten sein, und das Zugriffs-Verwaltungssystem kann für bestimmte Typen von Nutzdaten-Datenbanken automatisch im Zuge der Erzeugung eines neuen Datensatzes die entsprechenden Zugriffs-Zertifikate in den Feldern speichern. Beispielsweise wird bei Erzeugung eines neuen Finanzdaten-Datensatzes automatisch in das entsprechende Feld ein Finanzdaten-Zertifikat durch das Zugriffs-Verwaltungssystem eingefügt. Ein Nutzer, der auf einen solchen Datensatz zugreifen möchte, muss also zusätzlich zu dem Eignerschaftsrecht bezüglich der Datenbank und zusätzlich zu der Zugriffsberechtigung durch den Ersteller oder einer von diesen dazu ermächtigten Nutzer auch noch nachweisen, dass ihm ein Finanzdaten-Zertifikat zugewiesen ist. Dies kann die Sicherheit erhöhen, da so auf relativ generische und globale Art und Weise bestimmten Nutzern der Zugriff auf bestimmte Daten verwehrt werden kann, von welchen davon ausgegangen werden kann, dass sie für die Arbeit des Nutzers nicht notwendig sind. Vorzugsweise ist die Gesamtheit der Zugriffs-Zertifikate eines Datensatzes durch ein oder mehrere logische Operatoren wie zum Beispiel "AND" oder "OR" miteinander verbunden, sodass sich ein komplexer, logisch verbundener Ausdruck ergibt, welcher spezifiziert, welche Zugriffs-Zertifikate einem Nutzer zugewiesen sein müssen damit dieser Zugriff auf einen Datensatz hat. Dabei beinhalten die Zugriffs-Zertifikate eines Datensatzes vorzugsweise eine Mischung aus Zugriffs-Zertifikaten, die dem Ersteller des Datensatzes persönlich zugewiesen sind und die anderen Nutzern persönlich zugewiesen werden müssen um diesen Zugriff zu gewähren, und Zugriffs-Zertifikaten, die von dem Zugriffs-Verwaltungssystem oder einem menschlichen Nutzer automatisch oder manuell jedem Datensatz einer bestimmten Nutzdaten-Datenbank bei Erstellung zugewiesen werden (zum Beispiel Finanzdaten-Zugriffszertifikat oder Personaldaten-Zugriffszertifikat). Diese Zugriffs-Zertifikate werden auch als "Attribut-Zertifikate" bezeichnet.

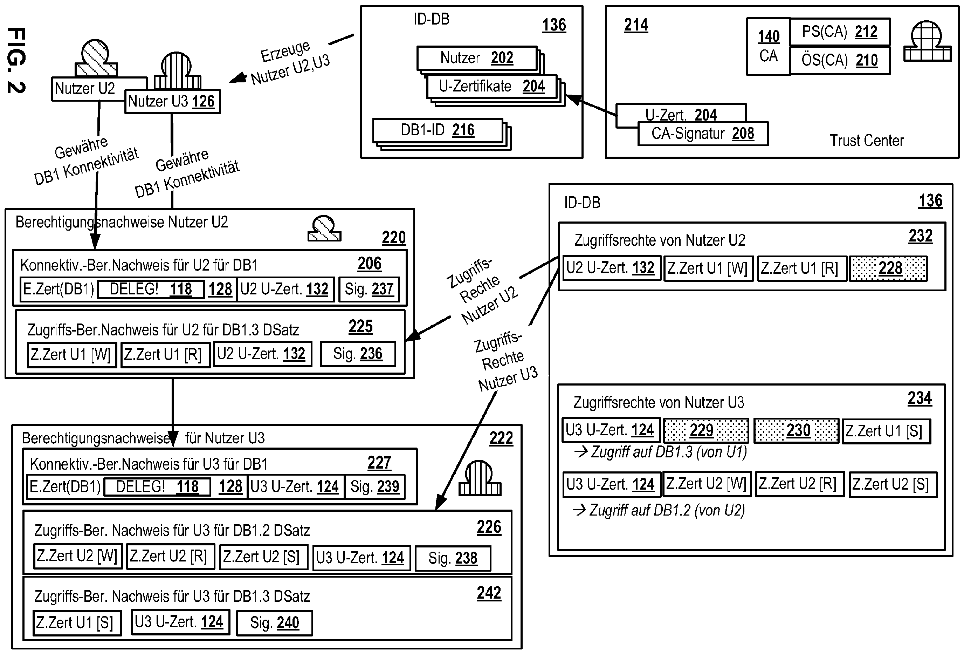

Optional können die einzelnen Ermächtigungsobjekte 139, 141, 143 mit dem privaten Signaturschlüssel 107 des Zugriffs-Verwaltungssystems signiert werden. Zusätzlich oder alternativ dazu können Berechtigungsnachweise, die in Antwort auf eine Zugriffsanfrage eines Nutzers an eine Nutzdaten-Datenbank von der ID-Datenbank für den Nutzer dynamisch erstellt werden, signiert werden (siehe Beschreibung Fig. 2).

**Figur** 2 illustriert den Vorgang der Erstellung von Berechtigungsnachweisen für zwei Nutzer U2, U3 gemäß einer weiteren Ausführungsform des erfindungsgemäßen Verfahrens. Wesentliche Komponenten der hier dargestellten Ausführungsform entsprechen den in Figur 1 beschriebenen Komponenten, jedoch können die Eignerschafts-und Zugriffsrechtsverhältnisse der in Figur 2 abgebildeten Situation von der in Figur 1 abgebildeten Situation abweichen.

In der ID-Datenbank sind einer Vielzahl von Nutzern 202 jeweils ein Nutzer-Zertifikat 204 zugewiesen. Die Nutzer-Zertifikate werden vorzugsweise von einer Zertifizierungsstelle 140 herausgegeben und mit einem privaten Signierschlüssel 212 der Zertifizierungsstelle signiert. Die Zertifizierungsstelle stellt zudem einen öffentlichen Signaturprüfschlüssel 210 zur Verfügung (zum Beispiel über entsprechende öffentliche Schlüsselverzeichnisse, die über das Internet einsehbar sind). Das bedeutet, dass die ID-Datenbank 136 die Validität eines Nutzer-Zertifikats durch Zertifikatskettenprüfung unter Einbeziehung des öffentlichen Signaturprüfschlüssels 210 der Zertifizierungsstelle prüfen kann. In der ID-Datenbank können Identifikatoren 216 mehrerer Nutzdaten-Datenbanken gespeichert sein, welchen wiederum jeweils ein oder mehrere eigene-Zertifikate zugewiesen sein können. Vorzugsweise enthält die ID-Datenbank jedoch keine Nutzdaten oder Verweise auf einzelne Datensätze in Nutzdaten-Datenbanken.

Wenn ein Nutzer U2, zum Beispiel über eine grafische Benutzeroberfläche, Zugriff auf Datensätze, die in der Nutzdaten-Datenbank-DB1 gespeichert sind, anfordert, wird von dem Zugriffs-Verwaltungssystem 100 automatisch eine Berechtigungsanfrage für diesen Nutzer U2 generiert und an die ID-Datenbank gesendet. Diese analysiert eine Menge an Ermächtigungskettenobjekten 137 um festzustellen, welche Eigner-Zertifikate und Zugriffs-Zertifikate dem Nutzer-Zertifikat 132 des Nutzers U2 zugewiesen sind und erstellt dynamisch in Antwort an diese Berechtigungsanfrage einen Berechtigungsnachweis 220 für den Nutzer U2. Aus diesem Berechtigungsnachweis geht hervor, dass dem Nutzer U2 ein Eigner-Zertifikat 128 für die Datenbank-DB1 zugewiesen ist, der Nutzer also zum Aufbau einer Datenbank Verbindung zur DB1 berechtigt ist. Außerdem geht aus dem Berechtigungsnachweis hervor, dass der Nutzer U2 berechtigt ist für den Schreibzugriff auf sämtliche Datensätze, die von dem Nutzer-U1 erstellt wurden.

Beispielsweise kann der Berechtigungsnachweis gegliedert sein in einen Konnektivitätsnachweis 206 für den Nutzer U2 im Hinblick auf die Erstellung einer Datenbank Verbindung zur DB1 und in einen Zugriffsberechtigungsnachweis im Hinblick auf eine bestimmte Zugriffsart und im Hinblick auf alle Datensätze, die von einem bestimmten Nutzer erstellt wurden.

Der Berechtigungsnachweis 202 und/oder die jeweiligen Teil-Berechtigungsnachweise 206, 225 können eine Signatur 237, 236 enthalten, die mit dem privaten Signierschlüssel 107 der ID-Datenbank dynamisch in Antwort auf die Berechtigungsanfrage erzeugt wurde. Jede der Nutzdaten-Datenbanken beinhaltet einen öffentlichen Signaturprüfschlüssel 105, der mit dem privaten Signierschlüssel 107 ein asymmetrisches kryptographisches Schlüsselpaar bildet. Bevor die Nutzdaten-Datenbank-DB1 dem Nutzer U2 den Aufbau einer Datenbankverbindung und/oder den Zugriff auf einzelne Datensätze erlaubt, wird neben dem Vorhandensein der entsprechenden Zertifikate auch die Validität der Signaturen 237, 236 geprüft und der Verbindungsaufbau bzw. der Datensatzzugriff nur im Falle der Validität der Signatur zugelassen.

In analoger Weise wird in Antwort auf eine Zugriffsanfrage des Nutzers U3 von der ID-Datenbank der Berechtigungsnachweis 222 generiert und signiert, aus welchem hervorgeht, dass Nutzer U3 zum Verbindungsaufbau zur Datenbank-DB1 berechtigt ist. Außerdem geht aus den Berechtigungsnachweisen 226, 242 hervor, dass der Nutzer U3 auf die von Nutzer U2 erstellten Datensätze lesend und schreibend zugreifen darf und auch eine Indexabfrage um zu erfahren, ob ein bestimmter Datensatz, den der Nutzer erstellt hat, überhaupt existiert, durchführen darf. Außerdem darf Nutzer-U3 eine entsprechende Indexabfrage für Datensätze durchführen, die der Nutzer-U1 erstellt hat, jedoch nicht schreibend oder lesend zugreifen.

Dass der Nutzer U2 auf die Datensätze des Nutzers U1 nur lesend und schreibend, aber nicht per Indexzugriff zugreifen darf, geht aus dem Fehlen eines entsprechenden Zugriffs-Zertifikats in einem entsprechenden Zugriffsermächtigungskettenobjekt hervor. Dieses Fehlen ist durch Box 228 angedeutet.

Dass der Nutzer U3 auf die Datensätze des Nutzers U1 nicht schreibend oder lesend zugreifen darf, geht aus den Boxen 229, 230 hervor. Wenn einem Nutzer in der ID-Datenbank Zugriffsrechte in Form entsprechender Zugriffs-Zertifikate nicht zugewiesen sind, enthält auch der dynamisch erstellte Berechtigungsnachweis 220, 222 die entsprechenden Rechte nicht.

Vorzugsweise enthalten die dynamisch erstellten Berechtigungsnachweise 220, 222 nicht die gesamte Kette der Nutzer-Zertifikate derjenigen Nutzer, die anderen Nutzern entsprechende Eigner-Zertifikate oder Zugriffs-Zertifikate zugewiesen haben, sondern nur die dem anfragenden Nutzer zugewiesenen Eigner- und Zugriffs-Zertifikate sowie optional noch das Nutzer-Zertifikat des anfragenden Nutzers. Für den Nachweis der Berechtigung ist eine Dokumentation der Übertragungskette der Rechte nicht relevant. Dadurch, dass die Berechtigungsnachweise frei sind von den Nutzer-Zertifikaten der Übertragungskette, kann die Größe der Berechtigungsnachweise reduziert, das Verfahren beschleunigt und der Datenverkehr reduziert werden.

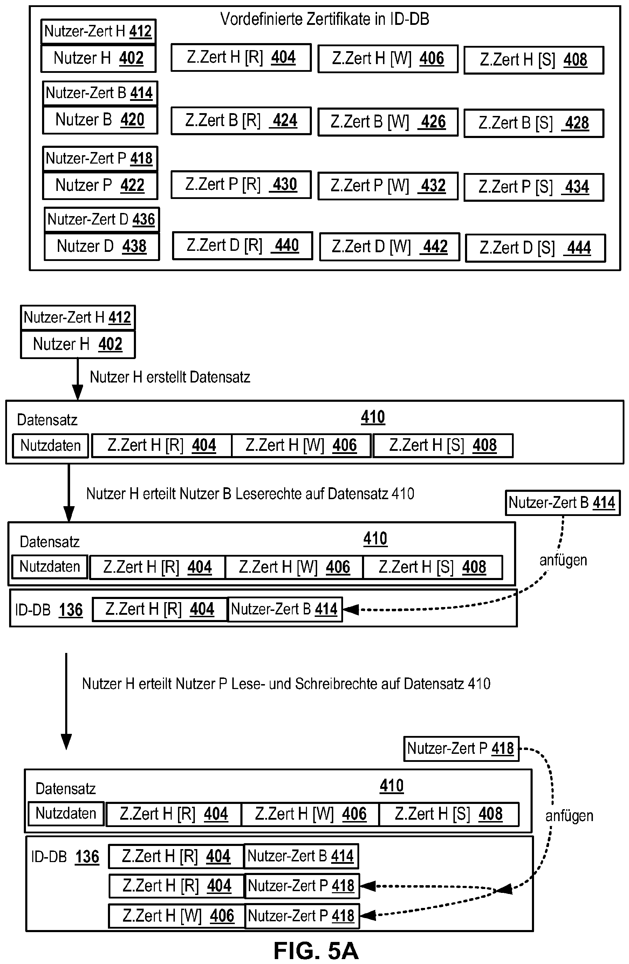

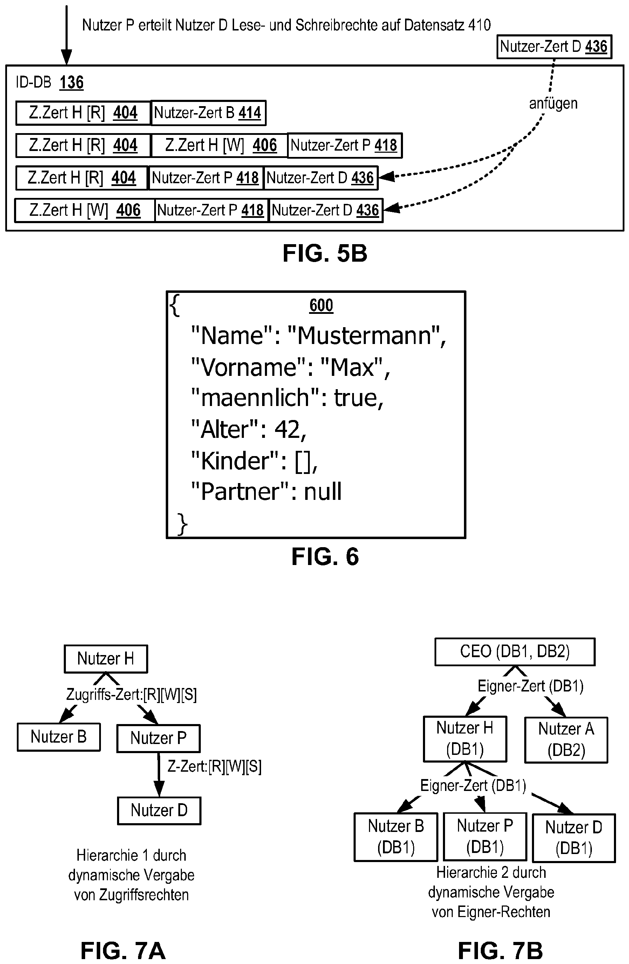

**Figur 5** zeigt beispielhaft für 4 Nutzer 402, 420, 422, 438, welche Zugriffs-Zertifikate und Nutzer-Zertifikate diesen Nutzern in der ID-Datenbank jeweils zugewiesen sein können. Beispielsweise ist dem Nutzer 402 ein Nutzer-Zertifikat 412 zugewiesen. Außerdem sind dem Nutzer 3 Zugriffs-Zertifikate für unterschiedliche Arten des Zugriffs auf die von ihm erstellten Datensätze zugewiesen, nämlich das Zugriffs-Zertifikat 404 für den Lesezugriff, das Zugriffs-Zertifikat 406 für den Schreibzugriff sowie das Zugriffs-Zertifikat 408 für den Zugriff auf einen oder mehrere Indices eine Nutzdaten-Datenbank um zu erfahren, ob und wie viele Datensätze dieser Nutzer in der Nutzdaten-Datenbank erstellt hat. In analoger Weise sind auch den anderen Nutzern 420, 422, 438 entsprechende Nutzer-Zertifikate und Zugriffs-Zertifikate zugewiesen.

Figur 5 illustriert zudem eine mögliche Sequenz der Übertragung von Zugriffs-Rechten über eine Kette mehrerer Nutzer.

In einem ersten Schritt erstellt der Nutzer 402 in einer Nutzdaten-Datenbank DB1 einen Datensatz 410. Im Zuge der Erstellung werden neben den eigentlichen Nutzdaten, wie zum Beispiel in Figur 6 abgebildet, automatisch im Hintergrund auch die 3 Zugriffs-Zertifikate 404, 406, und 408, die dem erstellenden Nutzer 402 zugewiesen sind, in entsprechenden Feldern des Datensatzes gespeichert.

In einem nächsten Schritt überträgt der Ersteller 402 mithilfe einer GUI einem anderen Nutzer 420 Leserechte auf den Datensatz 410 (sowie auf sämtliche anderen Datensätze, die der Nutzer 402 mit diesem speziellen Lesezugriffs-Zertifikat 404 erstellt hat). Dies bedeutet, dass das Zugriffs-Verwaltungssystem in der ID-Datenbank dem Nutzer dieses spezielle Lesezugriffs-Zertifikat 404 zuweist, zum Beispiel in dem dieses Zertifikat 404 mit dem Nutzer-Zertifikat 414 des Nutzers 420 verknüpft gespeichert wird, zum Beispiel innerhalb des gleichen Zugriffsermächtigungskettenobjekts.

Der Ersteller des Datensatzes 410 kann auch einem anderen Nutzer Zugriffsrechte einräumen. So räumt der Nutzer 402 beispielsweise im nächsten Schritt einem anderen Nutzer 422 (Nutzer-Zertifikat 418) Lese-und Schreibrechte für sämtliche von dem Nutzer 402 erstellten Datensätze, die die Zertifikate 404 und 406 beinhalten, ein. Die ID-Datenbank bzw. die Ermächtigungskettenobjekte werden um ein neues Zugriffsermächtigungskettenobjekt je Zugriffs-Zertifikat 404, 406, das dem Nutzer-Zertifikat 418 zugewiesen werden soll, ergänzt, welche spezifizieren, dass der Nutzer 402 dem Nutzer 422 die Zugriffs-Zertifikate 404 und 406 zugewiesen hat. In den neu generierten Zugriffsermächtigungskettenobjekten kann jeweils eine Kopie des oder der zugewiesenen Zugriffs-Zertifikate gespeichert sein, die zumindest im Hinblick auf den Wert eines Delegierbarkeitsparameters von dem ursprünglichen Zugriffs-Zertifikat abweicht. Dadurch kann jeder Nutzer der Kette kontrollieren, ob ein anderer Nutzer, dem er bestimmte Rechte einräumt, diese weitergeben kann oder nicht. In dem in Figur 5 dargestellten Beispiel wurden dem Nutzer 422 die Zugriffsrechte 404 und 406 in delegierbarer Form zugewiesen. Alternativ dazu ist es auch möglich dass nur ein einziges Zugriffsermächtigungskettenobjekt erzeugt wird, welches beide Zugriffs-Zertifikate 404, 406 und das Nutzer-Zertifikat 418 beinhaltet.

Der Nutzer 418 kann diese Rechte also an andere weitergeben, was im nächsten Schritt illustriert ist: der Nutzer 422 weist die ihm zugewiesenen Zugriffs-Rechte 404 und 406 nunmehr auch an den Nutzer 438 zu. Diese Zuweisung bewirkt eine Erstellung eines neuen Zugriffsermächtigungskettenobjekts in der ID-Datenbank für jedes der Zugriffs-Zertifikate 404, 406, in welchen jeweils die in ihnen enthaltene Nutzer-Zertifikatskette durch Anfügen eines weiteren Nutzer-Zertifikats 436 des Nutzers, dem die Rechte zugewiesen wurden, um ein Glied erweitert wird. Nach einer alternativen Implementierung wird für zwei oder mehrere Zugriffs-Zertifikate, die mit der gleichen Kette an Nutzer-Zertifikaten verknüpft sind, insgesamt nur ein neues Zugrifffsermächtigungskettenobjekt pro Rechteübertragung an einen anderen Nutzer erzeugt. Im Beispiel von Figur 5b würden die Zertifikate 404 und 406 im gleichen Zugrifffsermächtigungskettenobjekt gespeichert sein, welches zudem auch die Nutzer-Zertifikate 418 und 436 beinhaltet.

Die in den Ermächtigungskettenobjekten dokumentierte Kette an Nutzer-Zertifikaten dokumentiert die Übertragung von Eigner-oder Zugriffs-Rechten über eine Sequenz mehrerer Nutzer. Die Sequenz kann aus einer bloßen Aneinanderreihung von Nutzer-Zertifikaten bestehen, wobei beispielsweise die Position der Nutzer-Zertifikate innerhalb der Kettenobjekte die zeitliche Reihe der Übertragungen repräsentiert. Optional kann nach manchen Ausführungsformen die Kette von Nutzer-Zertifikaten innerhalb eines Ermächtigungskettenobjekten dadurch generiert werden, dass die ID-Datenbank die den einzelnen Nutzer-Zertifikaten zugeordneten privaten Schlüssel so verwendet, dass das letzte Nutzer-Zertifikat in der Kette das an dieses neuangefügte neue Nutzer-Zertifikat signiert, sodass auch innerhalb der Kette der Nutzer-Zertifikate der einzelnen Ermächtigungskettenobjekte eine Zertifikatskettenprüfung möglich ist.

**Figur 6** zeigt ein Beispiel für Nutzdaten 600, die Bestandteil eines Datensatzes 106, 108 sein können. Die Nutzdaten sind im JSon Format spezifiziert. Es können jedoch auch beliebige andere Datenformate verwendet werden.

**Figur 7** zwei dynamisch und unabhängig voneinander durch mehrere Nutzer über die erste und zweite Schnittstelle generierte Hierarchien, entlang welcher einerseits Zugriffsrechte und andererseits Eignerrechte über eine Kaskade von Nutzern vergeben wurden.

So repräsentiert die in **Figur 7A** abgebildete Hierarchie eine Kaskade von Zugriffsrechten auf ein oder mehrere von Nutzer H erstellte Datensätze. Das Zugriffs-Recht umfasst z.B. drei Zugriffsarten Lesen [R], Schreiben [W] und Indexzugriff [S] und kann mittels einem kombinierten oder drei unterschiedlichen Zugriffs-Zertifikaten auf andere Nutzer übertragen werden. Im vorliegenden Fall hat der Nutzer H, der einen Datensatz erstellte und mit den besagten Zugriffsrechtein (in der Nutzdaten-Datenbank) verknüpfte, die Zugriffrechte über drei Zugriffs-Zertifikate an die Nutzer B und P weitergegeben, wobei Nutzer P diese Zugriffsrechte auf die von H erstellten Datensätze wiederum an den Nutzer D weitergab. Somit bezieht Nutzer D seine Zugriffsrechte auf die Daten von H über den Mittelsmann "P".

Die in **Figur 7B** abgebildete Hierarchie bildet eine Kaskade von Eigner-Rechten auf ein oder mehrere Nutzdaten-Datenbanken DB1, DB2 ab. Der Geschäftsführer CEO hat z.B. Eigner-Zertifikate sowohl für Datenbank DB1 als auch DB2. Er überträgt diese Eigner-Rechte über eine Schnittstelle des Zugriffs-Verwaltungssystems derart, dass Nutzer H ein Eigner-Zertifikat für die Datenbank DB1 und Nutzer A ein Eigner-Zertifikat für Datenbank DB2 zugewiesen wird. Nutzer H wiederum überträgt Eignerschafts-Rechte für die Datenbank DB1 an die Nutzer B, P und D. Jedem Nutzer, der ein Eigner-Zertifikat für z.B. DB1 zugewiesen bekommt, ist damit ermächtigt, eine Datenbankverbindung zu der entsprechenden Nutzdaten-Datenbank aufzubauen und in dieser eigene Datensätze anzulegen. Im vorliegenden Fall hat der Nutzer D Eignerschaftsrechte für die Datenbank DB1 über den Nutzer H vom CEO erhalten. Die Weitergabe von Zugriffsrechten über Zugriffs-Zertifikate wie in 7A dargestellt und die Weitergabe von Eigner-Rechten über Eigner-Zertifikate wie in 7B dargestellt erfolgen entlang einer dynamisch zwischen Nutzern definierten Kette des Vertrauens und vorzugsweise unabhängig von einer vorgegebenen Hierarchie. Ein in der Unternehmenshierarchie in der Mitte angesiedelter Nutzer kann also sowohl seinem Vorgesetzten als auch seinen Untergebenen Zugriffsrechte und/oder Eigner-Rechte einräumen.

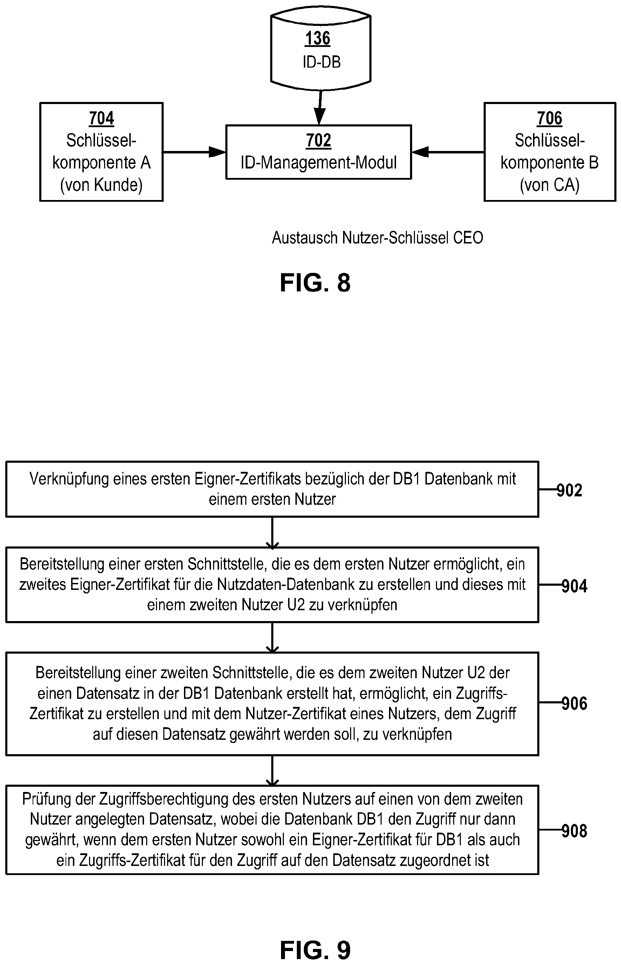

**Figur 8** zeigt eine Sonderfunktionalität des Zugriffs-Verwaltungssystems zum Austausch eines Nutzer-Zertifikats leitender Personen einer Organisation, insbesondere eines Geschäftsführers, gemäß einer weiteren Ausführungsform.

Die Nutzer-Zertifikate, die den Mitgliedern einer Organisation zugewiesen sind, werden vorzugsweise alle von der gleichen Zertifizierungsstelle ausgestellt und gehören der gleichen Public-Key-Infrastrukturen (PKI) an. Dies bedeutet, dass nach Ausführungsformen die Nutzer-Zertifikate alle Element eines Zertifikatskettenbaums sind, welcher von einem Root-Zertifikat der Zertifizierungsstelle ausgeht. Das Nutzer-Zertifikat des Geschäftsführers (oder einer anderen Person, die in der jeweiligen Organisation eine leitende Funktion einnimmt), im Folgenden auch CEO-Zertifikat genannt, wird nach Ausführungsformen der Erfindung dazu verwendet, um die Nutzer-Zertifikate anderer Nutzer, die diesem "CEO" Nutzer in der Organisationshierarchie untergeordnet sind, zu signieren, sodass die Gesamtheit der in der Organisation verwendeten Nutzer-Zertifikate oder zumindest eine Teilmenge dieser Nutzer-Zertifikate einen zusammenhängenden, hierarchischen, per Zertifikatskettenprüfung prüfbaren Baum von sich beglaubigenden Zertifikaten darstellt. Ergänzend oder alternativ dazu können die Nutzerzertifikate auch zur Beglaubigung/Signierung anderer Zertifikate, z.B. der Zugriffs- oder Eigner- Zertifikate, die ein Nutzer für andere Nutzer ausstellt, verwendet werden. Beispielsweise könnte ein privater Signierschlüssel, der dem Nutzer-Zertifikat eines Nutzers zugeordnet ist, eine für einen anderen Nutzer ausgestellte Kopie eines Zugriffs-Zertifikats signieren, sodass diese Signatur als Nachweis dient, dass das entsprechende Zugriffsrecht mit Wissen und Wollen des vorigen Eigentümers auf einen anderen Nutzer übertragen wurde.

In den so gebildeten Zertifikatshierarchien innerhalb einer Organisation hängt die Gültigkeitsprüfung der Zertifikate von der Gültigkeit des CEO-Nutzers ab, dessen Nutzer-Zertifikat in der so gebildeten Hierarchie ganz oben steht. Sofern dieses Zertifikat und sein privater Schlüssel gesperrt werden muss (z.B. nach einem Ausscheiden des CEO, wenn dieser beim neuen Geschäftsführer kein Vertrauen besitzt) muss ein neues CEO-Zertifikat einschließlich eines neuen privaten Schlüssels des Zertifikats ausgestellt und an die Teilnehmer der Organisation verteilt werden. Da damit alle von dem CEO-Zertifikat abgeleiteten Zertifikate invalide werden, ist diese Situation für das technische Funktionieren der IT Infrastruktur der Organisation unter Umständen sehr problematisch. Es kann dabei zu erheblichen Problemen im laufende Betrieb der Organisation kommen.

Um einen sicheren Austausch des Zertifikats des CEO einer Organisation einschließlich des dem CEO-Zertifikat zugeordneten privaten Schlüssels zu ermöglichen, wird das Nutzer-Zertifikat des CEOs (oder einer anderen Person an der Spitze der Organisationshierarchie) durch eine spezielle Routine des Zugriffs-Verwaltungssystems 100, die z.B. in einem ID-Management Modul 702 implementiert sein kann, erstellt. Hierzu wird der private Schlüssel des CEO-Nutzers nicht wie die privaten Schlüssel der anderen Nutzer in der ID-Datenbank gespeichert, sondern in zumindest zwei Teile A 704 und B 706 geteilt. Die beiden Schlüsselkomponenten werden von zwei vertrauenswürdigen Personen außerhalb der ID-Datenbank getrennt voneinander und sicher verwahrt. Um diesen privaten CEO Schlüssel samt zugehörigem Zertifikat auszutauschen, müssen beide Personen die jeweiligen Schlüsselkomponenten A und B zur Verfügung stellen um den privaten Schlüssel des CEOs zu rekonstruieren. Die spezielle Routine ermöglicht es im Beisein beider Schlüsselkomponenten einen neuen privaten Schlüssel für das Zertifikat zu erzeugen, der den bisherigen CEO Schlüssel ersetzt. Der neue private Schlüssel wird nun ebenfalls in zwei oder mehr neue Schlüsselkomponenten geteilt, die getrennt außerhalb der ID-Datenbank sicher verwahrt werden.

**Figur 9** zeigt ein Flussdiagramm einer weiteren Ausführungsform eines erfindungsgemäßen Verfahrens zur Zugriffskontrolle auf Datensätze 106, 108, 110, 112, 114, 116 mehrerer Nutzdaten-Datenbanken eines Zugriffs-Verwaltungssystems 100. In einem ersten Schritt 902 des Verfahrens wird ein erstes Eigner-Zertifikats 128, 13), das einer Nutzdaten-Datenbank 102 zugeordnet ist, mit einem ersten Nutzer U1 verknüpft. Ein Eigner-Zertifikat ist ein Zertifikat, das einer oder mehreren Nutzdaten-Datenbanken zugeordnet ist und das jedem Nutzer, mit dem es verknüpft ist, das Recht gewährt, Datensätze in dieser Nutzdaten-Datenbank anzulegen. Die Verknüpfung kann z.B. manuell durch einen menschlichen Nutzer über eine GUI des Zugriffs-Verwaltungssystems100 vorgenommen werden, oder automatisch und implizit durch das Zugriffs-Verwaltungssystem 100, z.B. dann, wenn ein Nutzer eine neue Nutzdaten-Datenbank innerhalb des Systems 100 anlegt.

In einem weiteren Schritt 904 wird eine erste Schnittstelle 142 bereitgestellt, die es dem ersten Nutzer U1 ermöglicht, ein zweites Eigner-Zertifikat für die Nutzdaten-Datenbank 102 zu erstellen und dieses mit einem zweiten Nutzer U2 zu verknüpfen um diesem zu ermöglichen, Datensätze in der Nutzdaten-Datenbank 102 anzulegen. Die erste Schnittstelle kann z.B. in Form einer GUI implementiert sein, welche Zugriff auf die ID-Datenbank hat und die von dem Nutzer erstellten Zertifikate und/oder die von einem entsprechend berechtigten Nutzer erstellte Zuweisung von Eigner-Zertifikaten an andere Nutzer in Form von Eigner- und Nutzer-Zertifikatszuweisungen in der ID-Datenbank zu speichert.

In einem weiteren Schritt 906 wird eine zweite Schnittstelle 144 bereitgestellt, die es dem zweiten Nutzer U2, der einen Datensatz 106, 108 in der Nutzdaten-Datenbank 102 erstellt hat, ermöglicht, mindestens ein Zugriffs-Zertifikat Z.Zert_U2[W], Z.Zert_U2[R], Z.Zert_U2[S], das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen. Die zweite Schnittstelle kann z.B. ebenfalls in Form einer GUI oder eines Teils der oben erwähnten GUI implementiert sein, welche die von dem Nutzer erstellten Zertifikate und/oder die von einem entsprechend berechtigten Nutzer erstellte Zuweisung von Zugriffs-Zertifikaten an andere Nutzer in Form von Zugriffs-und Nutzer-Zertifikatszuweisungen in der ID-Datenbank zu speichert.

Das Zugriffs-Verwaltungssystem prüft, in Antwort auf eine Zugriffsanfrage des ersten Nutzers bezüglich der in der Nutzdaten-Datenbank 102 gespeicherten Datensätze in Schritt 908, ob der erste Nutzers eine Zugriffsberechtigung auf einen von dem zweiten Nutzer angelegten Datensatz besitzt, ob dem ersten Nutzer also von dem zweiten Nutzer ein entsprechendes Zugriffs-Zertifikat für die von dem zweiten Nutzer erstellten Datensätze zugewiesen wurde. Die Nutzdaten-Datenbank gewährt dem ersten Nutzer den Zugriff auf die von dem zweiten Nutzer angelegte Datensätze nur dann, wenn dem ersten Nutzer in der ID-Datenbank sowohl ein Eigner-Zertifikat für die Nutzdaten-Datenbank 102 als auch ein Zugriffs-Zertifikat für den Zugriff auf den Datensatz zugeordnet ist.

### Bezugszeichenliste

- 100: Zugriffs-Verwaltungssystem
- 102: Nutzdaten-Datenbank DB1
- 104: Nutzdaten-Datenbank DB2
- 105: öffentlicher Signaturprüfschlüssel
- 106: Datensatz
- 107: privater Signierschlüssel
- 108: Datensatz
- 110: Datensatz
- 111: Signatur
- 112: Datensatz
- 113: Signatur
- 114: Datensatz
- 115: Signatur
- 116: Datensatz
- 118: Delegierter-Parameter
- 122: Berechtigungsnachweis
- 123: Modul zur Zertifikatskettenprüfung
- 124: drittes Nutzer-Zertifikat
- 125: Log
- 126: Nutzer
- 128: Eigner-Zertifikat für Datenbank DB1
- 132: zweites Nutzer-Zertifikat
- 134: erstes Nutzer-Zertifikat
- 136: ID-Datenbank
- 137: Zugriffs-und Eignerschafts-Ermächtigungskettenobjekte
- 138: Zertifikatskette
- 139: Eignerschaftsermächtigungskettenobjekt
- 140: Zertifizierungsstelle
- 141: Eignerschaftsermächtigungskettenobjekt
- 142: erste Schnittstelle
- 143: Zugriffsermächtigungskettenobjekt
- 144: zweite Schnittstelle
- 202: Nutzer/Datenbank Nutzer
- 204: Nutzer-Zertifikate
- 206: Konnektivitäts-Berechtigungsnachweis für best. Nutzer und DB
- 208: Signatur eines privaten Schlüssels einer Zertifizierungsstelle
- 210: öffentlicher Signaturprüfschlüssel einer Zertifizierungsstelle
- 212: privater Signaturschlüssel der Zertifizierungsstelle
- 214: Trust-Center
- 216: IDs von Nutzdaten-Datenbanken
- 220: Berechtigungsnachweis für Nutzer U2
- 222: Berechtigungsnachweis für Nutzer U3
- 225: Zugriffs-Berechtigungsnachweis für best. Nutzer und Datensatz
- 226: Zugriffs-Berechtigungsnachweis für best. Nutzer und Datensatz
- 227: Konnektivitäts-Berechtigungsnachweis für best. Nutzer und DB
- 228: Fehlen des [S] Zugriffsrechts für Nutzer U2 bzgl. Daten, die von Nutzer U1 erstellt wurden
- 229: Fehlen des [W] Zugriffsrechts für Nutzer U3 bzgl. Daten, die von Nutzer U1 erstellt wurden
- 230: Fehlen des [R] Zugriffsrechts für Nutzer U3 bzgl. Daten, die von Nutzer U1 erstellt wurden
- 232: [W] und [R] Zugriffsrechte des Nutzers U2 auf Daten, die von Nutzer U1 erstellt wurden
- 234: Zugriffsrechte des Nutzers U3 auf Daten, die von Nutzer U1 und U2 erstellt wurden
- 236: Signatur von Berechtigungsnachweis 225
- 237: Signatur von Berechtigungsnachweis 206
- 238: Signatur von Berechtigungsnachweis 226
- 239: Signatur von Berechtigungsnachweis 227
- 240: Signatur von Berechtigungsnachweis 242
- 242: Zugriffs-Berechtigungsnachweis für best. Nutzer und Datensatz
- 302: Geschäftsführer
- 304: Bereichsleiter Finanzen
- 308: Leitung IT-Sicherheit
- 310: Leitung IT-Infrastruktur
- 312: Leitung IT-Applikation Entwicklung
- 314: Administrator
- 316: Administrator
- 318: Administrator
- 402: Nutzer H
- 404-408: Zugriffs-Zertifikate für von H erstellte Daten
- 410: Datensatz
- 412: Nutzer-Zertifikat für Nutzer H
- 420: Nutzer B
- 424-428: Zugriffs-Zertifikate für von B erstellte Daten
- 414: Nutzer-Zertifikat für Nutzer B
- 422: Nutzer P
- 430-434: Zugriffs-Zertifikate für von P erstellte Daten
- 418: Nutzer-Zertifikat für Nutzer P
- 436: Nutzer D
- 440-444: Zugriffs-Zertifikate für von D erstellte Daten
- 438: Nutzer-Zertifikat für Nutzer D
- 600: Nutzdaten
- 702: ID-Management-Modul
- 704: Schlüsselkomponente A
- 706: Schlüsselkomponente B
- 902-908: Schritte

## Patentansprüche

1. Verfahren zur Zugriffskontrolle auf Datensätze (106, 108, 110, 112, 114, 116), umfassend:
- Verknüpfung (902) eines ersten Eigner-Zertifikats (128, 130), das einer Nutzdaten-Datenbank (102) zugeordnet ist, mit einem ersten Nutzer (U1), wobei ein Eigner-Zertifikat ein Zertifikat ist, das einer oder mehreren Nutzdaten-Datenbanken zugeordnet ist und jedem Nutzer, mit dem es verknüpft ist, das Recht gewährt, Datensätze in dieser Nutzdaten-Datenbank anzulegen;
- Bereitstellung (904) einer ersten Schnittstelle (142), die es dem ersten Nutzer (U1) ermöglicht, ein zweites Eigner-Zertifikat für die Nutzdaten-Datenbank (102) zu erstellen und dieses mit einem zweiten Nutzer (U2) zu verknüpfen um diesem zu ermöglichen, Datensätze in der Nutzdaten-Datenbank (102) anzulegen;
- Bereitstellung (906) einer zweiten Schnittstelle (144), die es dem zweiten Nutzer (U2), der einen Datensatz (106, 108) in der Nutzdaten-Datenbank (102) erstellt hat, ermöglicht, mindestens ein Zugriffs-Zertifikat (Z.Zert_U2[W], Z.Zert_U2[R], Z.Zert_U2[S]), das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen, wobei die Verknüpfung des zumindest einen Zugriffs-Zertifikat mit dem erzeugten Datensatz so erfolgt, dass das zumindest eine Zugriffs-Zertifikat desjenigen Nutzers, welcher den Datensatz erstellt hat, als Bestandteil des Datensatzes in einem eigenen Feld der Nutzdaten-Datenbank gespeichert wird, wobei das zumindest eine Zugriffs-Zertifikat mehrere Zugriffs-Zertifikate (Z.Zert_U2[W], Z.Zert_U2[R], Z.Zert_U2[S]) für jeweils andere Zugriffsarten beinhaltet;
- für jede der Zugriffsarten, Erzeugung einer Indexstruktur aus den Zugriffs-Zertifikaten sämtlicher Datensätze, die diese Zugriffsart spezifiziert,
- In Antwort auf eine Datenbankfrage eines Nutzers, die auf einen oder mehrere der für die Nutzdaten-Datenbank erstellten Indices der Zugriffs-Zertifikate zugreift, Prüfung ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist, und Ermöglichung der Verwendung der ein oder mehreren Indices zur Ausführung der Datenbankabfrage nur dann, wenn dem Nutzer das Indexzugriffs-Zertifikat zugewiesen ist;
- Prüfung (908) der Zugriffsberechtigung des ersten Nutzers auf einen von dem zweiten Nutzer angelegten Datensatz, wobei die Nutzdaten-Datenbank den Zugriff nur dann gewährt, wenn dem ersten Nutzer sowohl ein Eigner-Zertifikat für die Nutzdaten-Datenbank als auch ein Zugriffs-Zertifikat für den Zugriff auf den Datensatz zugeordnet ist.

2. Verfahren nach Anspruch 1, wobei die Prüfung der Zugriffsberechtigung umfasst:
- Empfang einer Zugriffsanfrage durch die Nutzdaten-Datenbank von dem ersten Nutzer;
- Aufbau einer Datenbankverbindung für den ersten Nutzer zu der Nutzdaten-Datenbank nur dann, wenn die Nutzdaten-Datenbank feststellt, dass ein valides Eigner-Zertifikat der Nutzdaten-Datenbank mit dem ersten Nutzer verknüpft ist, wobei der Aufbau der Datenbankverbindung unabhängig davon erfolgt, welche Zugriffs-Zertifikate mit dem ersten Nutzer verknüpft sind;
- Falls die Datenbankverbindung aufgebaut wird, Gewährung des Zugriffs auf den Datensatz des zweiten Nutzers nur dann, wenn die Nutzdaten-Datenbank feststellt, dass ein Zugriffs-Zertifikat mit dem ersten Nutzer verknüpft ist, wobei der Zugriff nur im Rahmen der in dem Zugriffs-Zertifikat spezifizierten Art des Zugriffs gewährt wird.

3. Verfahren nach einem der vorigen Ansprüche, wobei das mindestens eine Zugriffs-Zertifikat ein oder mehrere der folgenden Zugriffs-Zertifikattypen umfasst:
- ein Lesezugriffs-Zertifikat (Z.Zert_U2[R]), welches einem Nutzer einen lesenden Zugriff auf den Inhalt eines Datensatzes ermöglicht;
- ein Schreibzugriffs-Zertifikat (Z.Zert_U2[W]), welches einem Nutzer einen modifizierenden Zugriff auf den Inhalt eines bereits existierenden Datensatzes ermöglicht;
- ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht.

4. Verfahren nach einem der vorigen Ansprüche, wobei das erste und/oder zweite Eigner-Zertifikat einen Delegierbarkeitsparameter (118) beinhaltet, welcher entweder den Datenwert "DELEGIERBAR" oder den Datenwert "NICHT DELEGIERBAR" annehmen kann, wobei eine zur Erstellung der Eigner-Zertifikate verwendete Programmlogik so konfiguriert ist, dass
- ein Nutzer, dem ein Eigner-Zertifikat für die Nutzdaten-Datenbank (102) zugeordnet ist und welcher ein Eigner-Zertifikat für einen anderen Nutzer für diese Nutzdaten-Datenbank erstellt, den Delegierbarkeitsparameter des erstellten Eigner-Zertifikats unabhängig vom Delegierbarkeitsparameter seines Eigner-Zertifikats auf "NICHT DELEGIERBAR" setzen kann, den Delegierbarkeitsparameter des erstellten Eigner-Zertifikats jedoch nur dann auf "DELEGIERBAR" setzen kann, wenn der Delegierbarkeitsparameter seines Eigner-Zertifikats den Wert "DELEGIERBAR" hat; und
- ein Nutzer, welchem eine Eigner-Zertifikat für eine Nutzdaten-Datenbank zugeordnet ist, dessen Delegierbarkeitsparameter den Wert "NICHT DELEGIERBAR" hat, keine weiteren Eigner-Zertifikate für andere Nutzer für diese Nutzdaten-Datenbank erstellen kann.

5. Verfahren nach einem der vorigen Ansprüche, wobei es sich bei der Nutzdaten-Datenbank um eine NoSQL-Datenbank handelt.

6. Verfahren nach einem der vorigen Ansprüche, wobei dem ersten Nutzer (134) ein erstes Nutzer-Zertifikat zugeordnet ist, wobei das erste Nutzer-Zertifikat in eine von einer Zertifizierungsstelle (140) herausgegebene erste Zertifikatskette prüfbar eingeordnet ist.

7. Verfahren nach Anspruch 6, wobei die Erstellung des zweiten Eigner-Zertifikats umfasst:
- Erzeugung des zweiten Eigner-Zertifikats so, dass dieses in die erste Zertifikatskette eingeordnet ist und durch das erste Nutzer-Zertifikat prüfbar ist.

8. Verfahren nach einem der vorigen Ansprüche 6-7, wobei dem zweiten Nutzer ein zweiten Nutzer-Zertifikat (132) zugeordnet ist, wobei das zweite Nutzer-Zertifikat in eine von einer Zertifizierungsstelle (140) herausgegebene zweite Zertifikatskette prüfbar eingeordnet ist.

9. Verfahren nach einem der vorigen Ansprüche, wobei das zumindest eine Zugriffs-Zertifikat einen Delegierbarkeitsparameter beinhaltet, welcher entweder den Datenwert "DELEGIERBAR" oder den Datenwert "NICHT DELEGIERBAR" annehmen kann, wobei eine zur Erstellung jedes der Zugriffs-Zertifikate verwendete Programmlogik so konfiguriert ist, dass
- Ein Nutzer, dem ein Zugriffs-Zertifikat für einen Datensatz (106-116) in der Nutzdaten-Datenbank (102) zugeordnet ist und welcher ein Zugriffs-Zertifikat für einen anderen Nutzer für diesen Datensatz erstellt, den Delegierbarkeitsparameter des erstellten Zugriffs-Zertifikats unabhängig vom Delegierbarkeitsparameter seines Zugriffs-Zertifikats auf "NICHT DELEGIERBAR" setzen kann, den Delegierbarkeitsparameter des erstellten Zugriffs-Zertifikats jedoch nur dann auf "DELEGIERBAR" setzen kann, wenn der Delegierbarkeitsparameter des diesem Nutzer zugewiesenen Zugriffs-Zertifikats den Wert "DELEGIERBAR" hat; und
- Ein Nutzer, welchem ein Zugriffs-Zertifikat für einen Datensatz zugeordnet ist, dessen Delegierbarkeitsparameter den Wert "NICHT DELEGIERBAR" hat, keine weiteren Zugriffs-Zertifikate für andere Nutzer für diesen Datensatz erstellen kann.

10. Verfahren nach einem der vorigen Ansprüche, wobei in einer ID-Datenbank (136) eine Vielzahl von Nutzer-Zertifikaten, eine Vielzahl von Zugriffs-Zertifikaten und eine Vielzahl von Eigner-Zertifikaten gespeichert sind, ferner umfassend:
- Speicherung von Eignerschaftsermächtigungskettenobjekten (139, 141), wobei jedes Eignerschaftsermächtigungskettenobjekt eines der Eigner-Zertifikate und ein oder mehrere der Nutzer-Zertifikate beinhaltet, wobei die Reihung der Nutzer-Zertifikate in dem Eignerschaftsermächtigungskettenobjekt die Sequenz der Nutzer, die dieses Eignerschafts-Zertifikat für jeweils andere Nutzer, deren Nutzer-Zertifikat in dem Eignerschaftsermächtigungskettenobjekt enthalten ist, erstellt haben, widergibt; und/oder
- Speicherung von Zugriffsermächtigungskettenobjekten (143), wobei jedes Zugriffsermächtigungskettenobjekt eines der Zugriffs-Zertifikate und ein oder mehrere der Nutzer-Zertifikate beinhaltet, wobei die Reihung der Nutzer-Zertifikate in dem Zugriffsermächtigungskettenobjekt die Sequenz der Nutzer, die dieses Zugriffs-Zertifikat für jeweils andere Nutzer, deren Nutzer-Zertifikat in dem Zugriffsermächtigungskettenobjekt enthalten ist, erstellt haben, widergibt.

11. Verfahren nach Anspruch 10,
- wobei die Nutzdaten-Datenbanken frei sind von Zugriffsermächtigungskettenobjekten und für jeden Datensatz nur die Zugriffs-Zertifikate beinhaltet, die dem Nutzer, welcher diesen Datensetz erstellt hat, Zugriff auf diesen Datensatz gewähren.

12. Verfahren nach einem der vorigen Ansprüche,
- wobei jedem der Datensätze in der Nutzdaten-Datenbank ein oder mehrere Zugriffs-Zertifikate des den Datensatz erstellenden Nutzers zugeordnet sind;
- wobei den Eigner-Zertifikaten in der ID-Datenbank jeweils ein oder mehrere Nutzer-Zertifikate so zugeordnet sind, dass die chronologische Sequenz von Nutzern, die sich Eignerrechte der Nutzdaten-Datenbank eingeräumt haben, jeweils in Form einer ersten Hierarchie repräsentiert ist; und
- wobei den Zugriffs-Zertifikaten in der ID-Datenbank jeweils ein oder mehrere Nutzer-Zertifikate so zugeordnet sind, dass die chronologische Sequenz von Nutzern, die sich ein oder mehrere der Zugriffsrechte des den Datensatz erstellenden Nutzers eingeräumt haben, jeweils in Form einer zweiten Hierarchie repräsentieren ist; und
- wobei die ersten Hierarchien unabhängig von den zweiten Hierarchien dynamisch erzeugt werden.

13. Verfahren nach einem der vorigen Ansprüche, wobei die Nutzdaten-Datenbank die Datensätze in einem Format speichert, welches eine Extraktion der in den Datensätzen enthaltenen Information ohne einen Zugriff über eine Datenbankverbindung zu der Nutzdaten-Datenbank ausschließt, ferner mit:
- Durchführung eines Backups der Nutzdaten-Datenbank durch Kopieren der Nutzdaten-Datenbank durch einen Administrator-Nutzer auf ein anderes Speichermedium, wobei der Administrator-Nutzer kein Eigner-Zertifikat für diese Nutzdaten-Datenbank besitzt.

14. Verfahren nach einem der vorigen Ansprüche, ferner mit:
- Schreiben der chronologischen Sequenz der Erzeugung aller Eigner-Zertifikate und Zugriffs-Zertifikate sowie der Zuweisung von Zugriffs-Zertifikaten und Eigner-Zertifikaten zu Nutzer-Zertifikaten in ein Datenbanklog.

15. Zugriffs-Verwaltungssystem (100) umfassend zumindest eine Nutzdaten-Datenbank (102, 104) und eine ID-Datenbank (136), wobei das Zugriffs-Verwaltungssystem ausgebildet ist zur:
- Verknüpfung (902) eines ersten Eigner-Zertifikats (128, 130), das der Nutzdaten-Datenbank (102) zugeordnet ist, mit einem ersten Nutzer (U1), wobei ein Eigner-Zertifikat ein Zertifikat ist, das einer oder mehreren Nutzdaten-Datenbanken zugeordnet ist und jedem Nutzer, mit dem es verknüpft ist, das Recht gewährt, Datensätze in dieser Nutzdaten-Datenbank anzulegen;
- Bereitstellung (904) einer ersten Schnittstelle (142), die es dem ersten Nutzer (U1) ermöglicht, ein zweites Eigner-Zertifikat für die Nutzdaten-Datenbank (102) zu erstellen und dieses mit einem zweiten Nutzer (U2) zu verknüpfen um diesem zu ermöglichen, Datensätze in der Nutzdaten-Datenbank (102) anzulegen;
- Bereitstellung (906) einer zweiten Schnittstelle (144), die es dem zweiten Nutzer (U2), der einen Datensatz (106, 108) in der Nutzdaten-Datenbank (102) erstellt hat, ermöglicht, mindestens ein Zugriffs-Zertifikat (Z.Zert_U2[W], Z.Zert_U2[R], Z.Zert_U2[S]), das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen, wobei die Verknüpfung des zumindest einen Zugriffs-Zertifikat mit dem erzeugten Datensatz so erfolgt, dass das zumindest eine Zugriffs-Zertifikat desjenigen Nutzers, welcher den Datensatz erstellt hat, als Bestandteil des Datensatzes in einem eigenen Feld der Nutzdaten-Datenbank gespeichert wird, wobei das zumindest eine Zugriffs-Zertifikat mehrere Zugriffs-Zertifikate (Z.Zert_U2[W], Z.Zert_U2[R], Z.Zert_U2[S]) für jeweils andere Zugriffsarten beinhaltet;
- für jede der Zugriffsarten, Erzeugung einer Indexstruktur aus den Zugriffs-Zertifikaten sämtlicher Datensätze, die diese Zugriffsart spezifiziert,
- In Antwort auf eine Datenbankfrage eines Nutzers, die auf einen oder mehrere der für die Nutzdaten-Datenbank erstellten Indices der Zugriffs-Zertifikate zugreift, Prüfung ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist, und Ermöglichung der Verwendung der ein oder mehreren Indices zur Ausführung der Datenbankabfrage nur dann, wenn dem Nutzer das Indexzugriffs-Zertifikat zugewiesen ist;
- Prüfung (908) der Zugriffsberechtigung des ersten Nutzers auf einen von dem zweiten Nutzer angelegten Datensatz (108), wobei die Nutzdaten-Datenbank den Zugriff nur dann gewährt, wenn dem ersten Nutzer sowohl ein Eigner-Zertifikat für die Nutzdaten-Datenbank als auch ein Zugriffs-Zertifikat für den Zugriff auf den Datensatz zugeordnet ist.

## Claims

1. Method for controlling access to data sets (106, 108, 110, 112, 114, 116), comprising the steps of:
- linking (902) a first owner certificate (128, 130), which is assigned to a payload database (102), to a first user (U1), wherein an owner certificate is a certificate that is assigned to one or more payload databases and each user to whom it is linked has the right to enter data sets in this payload database;
- providing (904) a first interface (142), which allows the first user (U1) to create a second owner certificate for the payload database (102) and to link this certificate to a second user (U2) in order to allow said second user to enter data sets in the payload database (102);
- providing (906) a second interface (144), which allows the second user (U2), who has created a data set (106, 108) in the payload database (102), to create at least one access certificate (Z.Zert_U2[W], Z.Zert_U2[R], Z.Zert_U2[S]), which specifies a type of data set access to the data set created by the second user, and to link it to the user certificate of a user who is to be granted access to this data set, wherein the linking of the at least one access certificate to the generated data set is performed such that the at least one access certificate of the user who has created the data set is stored as part of the data set in a dedicated field of the payload database, wherein the at least one access certificate contains a plurality of access certificates (Z.Zert_U2[W], Z.Zert_U2[R], Z.Zert_U2[S]) for other certificate types;
- for each of the access types, generating an index structure from the access certificates of all data sets which specifies this access type,
- in response to a database query of a user accessing one or more of the indices of the access certificates created for the payload database, verifying whether the user is allocated an index access certificate (Z.Zert_U2[S]) which allows a user knowledge of the existence of the data set in the payload database and read access to metadata of the dataset, and allowing the use of the one or more indices to carry out the database query only if the user is allocated the index access certificate;
- verifying (908) the access authorisation of the first user to a data set entered by the second user, wherein the payload database grants the access only if the first user is assigned both an owner certificate for the payload database and an access certificate for the access to the data set.

2. Method according to claim 1, wherein the verification of the access authorisation comprises the steps of:
- receiving an access query by the payload database from the first user;
- establishing a database connection for the first user to the payload database only if the payload database determines that a valid owner certificate of the payload database is linked to the first user, wherein the database connection is established independently of which access certificates are linked to the first user;
- if the database connection is established, granting the access to the data set of the second user only if the payload database determines that an access certificate is linked to the first user, wherein the access is granted only within the scope of the type of access specified in the access certificate.

3. Method according to one of the preceding claims, wherein the at least one access certificate comprises one or more of the following access certificate types:
- a read access certificate (Z.Zert U2[R]), which allows a user read access to the content of a data set;
- a write access certificate (Z.Zert U2[W]), which allows a user access to modify the content of an existing data set;
- an index access certificate (Z.Zert_U2[S]), which allows a user knowledge of the existence of the data set in the payload database and read access to metadata of the data set.

4. Method according to one of the preceding claims, wherein the first and/or second owner certificate contains a delegatability parameter (118), which may assume either the data value "DELEGATABLE" or the data value "NOT DELEGATABLE", wherein a program logic used to create the owner certificates is configured such that
- a user to whom an owner certificate for the payload database (102) is assigned and who creates an owner certificate for another user for this payload database may set the delegatability parameter of the created owner certificate independently of the delegatability parameter of his owner certificate to "NOT DELEGATABLE", but may set the delegatability parameter of the created owner certificate to "DELEGATABLE" only if the delegatability parameter of his owner certificate has the value "DELEGATABLE"; and
- a user who is assigned an owner certificate for a payload database of which the delegatability parameter has the value "NOT DELEGATABLE" may not create any further owner certificates for other users for this payload database.

5. Method according to one of the preceding claims, wherein the payload database is a NoSQL database.

6. Method according to one of the preceding claims, wherein the first user (134) is assigned a first user certificate, wherein the first user certificate is ordered in checkable fashion in a first certificate chain issued by a certification authority (140).

7. Method according to claim 6, wherein the creation of the second owner certificate comprises the steps of:
- generating the second owner certificate such that this is ordered in the first certificate chain and can be checked by the first user certificate.

8. Method according to one of preceding claims 6-7, wherein the user is assigned a second user certificate (132), wherein the second user certificate is ordered in checkable fashion in a second certificate chain issued by a certification authority (140).

9. Method according to one of the preceding claims, wherein the at least one access certificate contains a delegatability parameter, which can assume either the data value "DELEGATABLE" or the data value "NOT DELEGATABLE", wherein a program logic used to create each of the access certificates is configured such that
- a user who is assigned an access certificate for a data set (106-116) in the payload database (102) and who creates an access certificate for another user for this data set may set the delegatability parameter of the created access certificate independently of the delegatability parameter of his access certificate to "NOT DELEGATABLE", but may set the delegatability parameter of the created access certificate to "DELEGATABLE" only if the delegatability parameter of the access certificate allocated to said user has the value "DELEGATABLE"; and
- a user who is assigned an access certificate for a data set of which the delegatability parameter has the value "NOT DELEGATABLE" may not create any further access certificates for other users for this data set.

10. Method according to one of the preceding claims, wherein a plurality of user certificates, a plurality of access certificates, and a plurality of owner certificates are stored in an ID database (136), the method also comprising the steps of:
- storing ownership authorisation chain objects (139, 141), wherein each ownership authorisation chain object contains one of the owner certificates and one or more of the user certificates, wherein the order of the user certificates in the ownership authorisation chain object reflects the sequence of the users who have created this ownership certificate for each other user whose user certificate is contained in the ownership authorisation chain object; and/or
- storing access authorisation chain objects (143), wherein each access authorisation chain object contains one of the access certificates and one or more of the user certificates, wherein the order of the user certificates in the access authorisation chain object reflects the sequence of the users who created this access certificate for each other user whose user certificate is contained in the access authorisation chain object.

11. Method according to claim 10,
- wherein the payload databases are free from access authorisation chain objects and for each data set contain only the access certificates that grant the user, who created this data set, access to this data set.

12. Method according to one of the preceding claims,
- wherein each of the data sets in the payload database are assigned one or more access certificates of the user creating the data set;
- wherein the owner certificates in the ID database are each assigned one or more user certificates such that the chronological sequence of users who have been granted owner rights to the payload database is represented in each case in the form of a first hierarchy; and
- wherein the access certificates in the ID database are each assigned one or more user certificates, such that the chronological sequence of users who have been granted one or more of the access rights of the user creating the data set is represented in each case in the form of a second hierarchy; and
- wherein the first hierarchies are dynamically generated independently of the second hierarchies.

13. Method according to one of the preceding claims, wherein the payload database stores the data sets in a format which rules out an extraction of the information contained in the data sets without access via a database connection to the payload database, the method further comprising the step of:
- carrying out a backup of the payload database by copying the payload database by an administrator user to another storage medium, wherein the administrator user does not have an owner certificate for this payload database.

14. Method according to one of the preceding claims, further comprising the step of:
- writing the chronological sequence of the generation of all owner certificates and access certificates and also allocating access certificates and owner certificates to user certificates in a database log.

15. Access management system (100) comprising at least one payload database (102, 104) and an ID database (136), wherein the access management system is designed for:
- linking (902) a first owner certificate (128, 130), which is assigned to the payload database (102), to a first user (U1), wherein an owner certificate is a certificate which is assigned to one or more payload databases and each user to whom it is linked is granted the right to enter data sets in this payload database;
- providing (904) a first interface (142), which allows the first user (U1) to create a second owner certificate for the payload database (102) and to link this to a second user (U2) in order to allow said second user to enter data sets in the payload database (102);
- providing (906) a second interface (144), which allows the second user (U2) who has created a data set (106, 108) in the payload database (102) to create at least one access certificate (Z.Zert_U2[W], Z.Zert_U2[R], Z.Zert_U2[S]), which specifies a type of data set access to the data set created by the second user, and to link it to the user certificate of a user who is to be granted access to this data set, wherein the linking of the at least one access certificate to the generated data set is performed such that the at least one access certificate of the user who has created the data set is stored as part of the data set in a dedicated field of the payload database, wherein the at least one access certificate contains a plurality of access certificates (Z.Zert_U2[W], Z.Zert_U2[R], Z.Zert_U2[S]) for other certificate types;
- for each of the access types, generating an index structure from the access certificates of all data sets which specifies this access type,
- in response to a database query of a user accessing one or more of the indices of the access certificates created for the payload database, examining whether the user is allocated an index access certificate (Z.Zert_U2[S]) which allows a user knowledge of the existence of the data set in the payload database and read access to metadata of the dataset, and enabling the use of the one or more indices to carry out the database query only if the user is allocated the index access certificate;
- verifying (908) the access authorisation of the first user to a data set (108) entered by the second user, wherein the payload database grants the access only if the first user is assigned both an owner certificate for the payload database and an access certificate for the access to the data set.

## Revendications

1. Procédé de contrôle d'accès à des ensembles de données (106, 108, 112, 114, 116) comprenant :
- la combinaison (902) d'un premier certificat propriétaire (128, 130), qui est associé à une banque de données de données d'utilisation (102), avec un premier utilisateur (U1), où un certificat propriétaire est un certificat qui est associé à une ou à plusieurs banques de données de données d'utilisation et à chaque utilisateur avec lequel il est combiné, qui donne le droit de déposer des ensembles de données dans cette banque de données de données d'utilisation ;
- la mise en place (904) d'une première interface (142) qui permet au premier utilisateur (U1) d'établir un deuxième certificat propriétaire pour la banque de données de données d'utilisation (102) et de combiner celui-ci avec un deuxième utilisateur (U2) afin de permettre à celui-ci de déposer des ensembles de données dans la banque de données de données d'utilisation (102) ;
- la mise en place (906) d'une deuxième interface (144) qui permet au deuxième utilisateur (U2), qui a établi un ensemble de données (106, 108) dans la banque de données de données d'utilisation (102), d'établir au moins un certificat d'accès (Z.Zert_U2[W], Z.Zert_U2[R], Z.Zert_U2[S], qui spécifie un type d'accès à l'ensemble de données pour l'ensemble de données établi par le deuxième utilisateur, et à le combiner avec le certificat d'utilisateur d'un utilisateur auquel l'accès à cet ensemble de données doit être accordé, où la combinaison de l'au moins un certificat d'accès a lieu avec l'ensemble de données créé de telle manière que l"au moins un certificat d'accès de l'utilisateur en question, lequel a établi l'ensemble de données, est stocké en tant que composante de l'ensemble de données dans un champ propre de la banque de données de données d'utilisation, où l'au moins un certificat d'accès contient plusieurs certificats d'accès (Z.Zert_U2[W], Z.Zert_U2[R], Z.Zert_U2[S] pour respectivement d'autres types d'accès ;
- pour chacun des types d'accès, la création d'une structure d'index à partir de tous les ensembles de données des certificats d'accès qui spécifie ce type d'accès,
- en réponse à une interrogation de la banque de données d'un utilisateur, qui accède à un ou à plusieurs des index établis pour la banque de données de données d'utilisation des certificats d'accès, la vérification si un certificat d'accès à l'index (Z.Zert_U2[S]), lequel est associé à l'utilisateur, permet la connaissance de l'existence de l'ensemble de données dans la banque de données de données d'utilisation et permet un accès en lecture à des métadonnées de l'ensemble de données, et la possibilité de l'emploi de l'index ou des index pour l'exécution de l'interrogation de la banque de données uniquement si le certificat d'accès aux index est accordé à l'utilisateur ;
- la vérification (908) de l'autorisation d'accès du premier utilisateur à un ensemble de données déposé par le deuxième utilisateur, où l'ensemble de données de données d'utilisation n'accorde l'accès que si à la fois un certificat propriétaire pour la banque de données de données d'utilisation et un certificat d'accès pour l'accès à l'ensemble de données sont associés au premier utilisateur.

2. Procédé selon la revendication 1, dans lequel la vérification de l'autorisation d'accès comprend :
- la réception d'une demande d'accès par la banque de données de données d'utilisation par le premier utilisateur ;
- l'établissement d'une liaison à la banque de données pour le premier utilisateur vers la banque de données de données d'utilisation uniquement si la banque de données de données d'utilisation constate qu'un certificat propriétaire valide de la banque de données de données d'utilisation est combiné avec le premier utilisateur, où l'établissement de la liaison à la banque de données a lieu indépendamment de la combinaison des certificats d'accès qui sont combinés avec le premier utilisateur ;
- dans le cas où la liaison à la banque de données est établie, l'autorisation d'accès à l'ensemble de données du deuxième utilisateur si la banque de données de données d'utilisation constate qu'un certificat d'accès est combiné avec le premier utilisateur, où l'accès est accordé uniquement dans le cadre du type d'accès spécifié dans le certificat d'accès.

3. Procédé selon l'une des revendications précédentes, dans lequel l'au moins un certificat d'accès comprend un ou plusieurs des types de certificats d'accès suivants :
- un certificat d'accès en lecture (Z.Zert_U2[R]), lequel permet à un utilisateur un accès en lecture pour le contenu d'un ensemble de données ;
- un certificat d'accès en écriture (Z.Zert_U2[W]), lequel permet à un utilisateur un accès pour la modification du contenu d'un ensemble de données déjà existant ;
- un certificat d'accès à l'index (Z.Zert_U2[S]), lequel permet à un utilisateur la connaissance de l'existence de l'ensemble de données dans la banque de données de données d'utilisation et un accès en lecture pour des métadonnées de l'ensemble de données.

4. Procédé selon l'une des revendications précédentes, dans lequel le premier et/ou le deuxième certificat propriétaire contient un paramètre de délégabilité (118), lequel peut prendre soit la valeur de donnée « DELEGABLE », soit la valeur de donnée « NON DELEGABLE », où une logique de programme employée pour l'établissement des certificats propriétaires est configurée de telle sorte :
- qu'un utilisateur, auquel est associé un certificat propriétaire pour la banque de données de données d'utilisation (102) et lequel établit un certificat propriétaire pour un autre utilisateur pour cette banque de données de données d'utilisation, peut régler le paramètre de délégabilité du certificat propriétaire établi de manière indépendante du paramètre de délégabilité de son certificat propriétaire sur « NON DELEGABLE », peut pourtant régler le paramètre de délégabilité du certificat propriétaire établi sur « DELEGABLE » uniquement si le paramètre de délégabilité de son certificat propriétaire a la valeur « DELEGABLE » ; et
- un utilisateur, auquel est associé un certificat propriétaire pour une banque de données de données d'utilisation, dont le paramètre de délégabilité a la valeur « NON DELEGABLE », ne peut établir d'autres certificats propriétaires pour d'autres utilisateurs pour cette banque de données de données d'utilisation.

5. Procédé selon l'une des revendications précédentes, dans lequel, dans le cas de la banque de données de données d'utilisation, il s'agit d'une banque de données NoSQL.

6. Procédé selon l'une des revendications précédentes, dans lequel un premier certificat d'utilisateur est associé au premier utilisateur (134), où le premier certificat utilisateur est classé de manière vérifiable dans une première chaîne de certificats édités par un organisme de certification.

7. Procédé selon la revendication 6, dans lequel l'établissement du deuxième certificat propriétaire comprend :
- la création du deuxième certificat propriétaire de sorte que celui-ci soit classé dans la première chaîne de certificats et soit vérifiable par le premier certificat d'utilisateur.

8. Procédé selon l'une des revendications précédentes 6 ou 7, dans lequel un deuxième certificat d'utilisateur (132) est associé au deuxième utilisateur, où le deuxième certificat d'utilisateur est classé dans une deuxième chaîne de certificats éditée par un organisme de certification (140).

9. Procédé selon l'une des revendications précédentes, dans lequel l'au moins un certificat d'accès contient un paramètre de délégabilité, lequel peut prendre soit la valeur de donnée « DELEGABLE », soit la valeur de donnée « NON DELEGABLE », où une logique de programme employée pour l'établissement de chacun des certificats d'accès est conçue de telle manière
- qu'un utilisateur, auquel est associé un certificat d'accès pour un ensemble de données (106 à 116) dans la banque de données de données d'utilisation (102) et lequel établit un certificat d'accès pour un autre utilisateur pour cet ensemble de données, peut régler le paramètre de délégabilité du certificat d'accès établi de manière indépendante du paramètre de délégabilité de son certificat d'accès sur « NON DELEGABLE », peut pourtant régler le paramètre de délégabilité du certificat d'accès établi sur « DELEGABLE » uniquement si le paramètre de délégabilité du certificat d'accès associé à cet utilisateur a la valeur « DELEGABLE » ; et
- un utilisateur, auquel est associé un certificat d'accès pour un ensemble de données, dont le paramètre de délégabilité a la valeur « NON DELEGABLE »ne peut pas établir des nouveaux certificats d'accès pour d'autres utilisateurs pour cet ensemble de données.

10. Procédé selon l'une des revendications précédentes, dans lequel une multiplicité de certificats d'utilisateur, une multiplicité de certificats d'accès et une multiplicité de certificats propriétaires sont stockées dans une banque de données d'ID (136), comprenant en outre :
- le stockage d'objets de chaînes d'autorisation de propriété (139, 141), où chaque objet de chaîne d'autorisation de propriété contient un des certificats propriétaires et un ou plusieurs des certificats d'utilisateurs, où le classement des certificats d'utilisateurs dans l'objet de chaîne d'autorisation de propriété reproduit la séquence des utilisateurs qui ont établi ce certificat de propriété pour respectivement un autre utilisateur, dont le certificat d'utilisateur est contenu dans l'objet de chaîne d'autorisation de propriété ; et/ou
- le stockage d'objets de chaînes d'autorisation d'accès (143), où chaque objet de chaîne d'autorisation d'accès contient un des certificats d'accès et un ou plusieurs certificats d'utilisateurs, où le classement des certificats d'utilisateurs dans l'objet de chaîne d'autorisation d'accès reproduit la séquence des utilisateurs qui ont établi ce certificat d'accès pour respectivement d'autres utilisateurs, dont le certificat d'utilisateur est contenu dans l'objet de chaîne d'autorisation d'accès.

11. Procédé selon la revendication 10,
- dans lequel les banques de données de données d'utilisation sont exemptes d'objets de chaînes d'autorisation d'accès et contiennent, pour chaque ensemble de données, uniquement les certificats d'accès qui accordent à l'utilisateur, lequel a établi cet ensemble de données, un accès à cet ensemble de données.

12. Procédé selon l'une des revendications précédentes,
- dans lequel un ou plusieurs certificats d'accès de l'utilisateur établissant l'ensemble de données sont associés à chacun des ensembles de données dans la banque de données de données d'utilisation ;
- dans lequel un ou plusieurs certificats d'utilisateur sont associés respectivement aux certificats propriétaires dans la banque de données d'ID de sorte que la séquence chronologique des utilisateurs, qui se sont aménagés des droits propriétaires de la banque de données de données d'utilisation, est représentée respectivement sous la forme d'une première hiérarchie ; et
- dans lequel un ou plusieurs certificats d'utilisateur sont associés respectivement aux certificats d'accès dans la banque de données d'ID de sorte que la séquence chronologique des utilisateurs, qui se sont aménagés des droits d'accès de la banque de données de données d'utilisation, est représentée respectivement sous la forme d'une deuxième hiérarchie ; et
- dans lequel les premières hiérarchies sont générées indépendamment des deuxièmes hiérarchies de manière dynamique.

13. Procédé selon l'une des revendications précédentes, dans lequel la banque de données de données d'utilisation stocke les ensembles de données dans un format, lequel exclut une extraction des informations contenues dans les ensembles de données sans un accès à la banque de données de données d'utilisation par le biais de la liaison à la banque de données, en outre avec :
- l'exécution d'une sauvegarde de la banque de données de données d'utilisation par la copie de la banque de données de données d'utilisation sur un autre support de stockage par un utilisateur administrateur, où l'utilisateur administrateur ne possède pas de certificat propriétaire pour cette banque de données de données d'utilisation.

14. Procédé selon l'une des revendications précédentes, en outre avec :
- l'écriture de la séquence chronologique de la génération de tous les certificats propriétaires et certificats d'accès, ainsi que l'assignation de certificats d'accès et de certificats propriétaires avec des certificats d'utilisateurs dans un journal de base de données.

15. Système de gestion d'accès (100) comprenant au moins une banque de données de données d'utilisation (102, 104) et une banque de données d'ID (136), où le système de gestion d'accès est conçu pour :
- la combinaison (902) d'un premier certificat propriétaire (128, 130), qui est associé à la banque de données de données d'utilisation (102), avec un premier utilisateur (U1), où un certificat propriétaire est un certificat qui est associé à une ou à plusieurs banques de données de données d'utilisation et à chaque utilisateur avec lequel il est combiné, donne le droit à déposer des ensembles de données dans cette banque de données de données d'utilisation ;
- la mise en place (904) d'une première interface (142) qui permet au premier utilisateur (U1) d'établir un deuxième certificat propriétaire pour la banque de données de données d'utilisation (102) et de combiner celui-ci avec un deuxième utilisateur (U2) afin de permettre à celui-ci de déposer des ensembles de données dans la banque de données de données d'utilisation (102) ;
- la mise en place (906) d'une deuxième interface (144) qui permet au deuxième utilisateur (U2), qui a établi un ensemble de données (106, 108) dans la banque de données de données d'utilisation (102), d'établir au moins un certificat d'accès (Z.Zert_U2[W], Z.Zert_U2[R], Z.Zert_U2[S], qui spécifie un type d'accès à l'ensemble de données pour l'ensemble de données établi par le deuxième utilisateur, et à le combiner avec le certificat d'utilisateur d'un utilisateur auquel l'accès à cet ensemble de données doit être accordé, où la combinaison de l'au moins un certificat d'accès a lieu avec l'ensemble de données créé de telle manière que l"au moins un certificat d'accès de l'utilisateur en question, lequel a établi l'ensemble de données, est stocké en tant que composante de l'ensemble de données dans un champ propre de la banque de données de données d'utilisation, où l'au moins un certificat d'accès contient plusieurs certificats d'accès (Z.Zert_U2[W], Z.Zert_U2[R], Z.Zert_U2[S] pour respectivement d'autres types d'accès ;
- pour chacun des types d'accès, la création d'une structure d'index à partir de tous les ensembles de données des certificats d'accès qui spécifie le type d'accès,
- en réponse à une interrogation de la banque de données d'un utilisateur, qui accède à un ou à plusieurs des index établis pour la banque de données de données d'utilisation des certificats d'accès, la vérification si un certificat d'accès à l'index (Z.Zert_U2[S]), lequel est associé à l'utilisateur, permet la connaissance de l'existence de l'ensemble de données dans la banque de données de données d'utilisation et permet un accès en lecture à des métadonnées de l'ensemble de données, et la possibilité de l'emploi de l'index ou des index pour l'exécution de l'interrogation de banque de données uniquement si le certificat d'accès aux index est accordé à l'utilisateur ;
- la vérification (908) de l'autorisation d'accès du premier utilisateur à un ensemble de données (108) déposé par le deuxième utilisateur, où l'ensemble de données de données d'utilisation n'accorde l'accès que si à la fois un certificat propriétaire pour la banque de données de données d'utilisation et un certificat d'accès pour l'accès à l'ensemble de données sont associés au premier utilisateur.
